(19) Europäisches Patentamt
European Patent Office
Office européen des brevets

(11) EP 4 280 311 A1

(12) # EUROPEAN PATENT APPLICATION
published in accordance with Art. 153(4) EPC

(43) Date of publication:
**22.11.2023 Bulletin 2023/47**

(21) Application number: **22925227.5**

(22) Date of filing: **01.04.2022**

(51) International Patent Classification (IPC):
***H01M 4/58*** *(2010.01)* ***H01M 4/62*** *(2006.01)*
***H01M 10/0525*** *(2010.01)*

(86) International application number:
**PCT/CN2022/084871**

(87) International publication number:
**WO 2023/184501 (05.10.2023 Gazette 2023/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Contemporary Amperex Technology Co., Limited**
**Ningde, Fujian 352100 (CN)**

(72) Inventors:
- **FENG, Lingyun**
  **Fujian 352100 (CN)**
- **FAN, Yanhuang**
  **Fujian 352100 (CN)**

(74) Representative: **Jacob, Reuben Ellis et al**
**Maucher Jenkins**
**Seventh Floor Offices**
**Artillery House**
**11-19 Artillery Row**
**London SW1P 1RT (GB)**

(54) **POSITIVE-ELECTRODE ACTIVE MATERIAL COMPOSITION, POSITIVE ELECTRODE PLATE, SECONDARY BATTERY, BATTERY MODULE, BATTERY PACK AND ELECTRIC APPARATUS**

(57) The present application provides a positive electrode active material composition, a positive electrode plate, a secondary battery, a battery module, a battery pack, and an electric device. In particular, the present application provides a positive electrode active material composition, including a positive electrode active material and a dispersant. The positive electrode active material composition of the present application can improve the poor dispersion of the positive electrode active material powder and the high viscosity of the slurry during the preparation of the positive electrode slurry, and further improve flexibility of the positive electrode plate.



Processed by Luminess, 75001 PARIS (FR)

## Description

TECHNICAL FIELD

The present application relates to the field of battery technology, and in particular to a positive electrode active material composition, a positive electrode plate, a secondary battery, a battery module, a battery pack and an electric device.

BACKGROUND

Secondary batteries are widely used in different fields such as new energy vehicles and energy storage power plants because of their advantages of high energy density, long service life and energy saving and environmental protection. The positive electrode plate of a secondary battery mainly includes a current collector and an electrode film layer containing a positive electrode active material. The positive electrode active material can be formed into a positive electrode slurry together with a dispersion medium and coated on the current collector of the electrode to form the positive electrode plate.

The positive electrode active material is usually used in the form of powder. Due to the large specific surface area and small particles of the positive electrode material powder, it is difficult to disperse the powder during the preparation of positive electrode slurry, the slurry viscosity is high and the solid content is difficult to increase, which in turn leads to defects such as cracks, stripes, uneven weight, particle scratches or pinholes easily during the coating of the electrode plate.

SUMMARY

The present application is carried out in view of the above subject matter, and one of the objectives is to provide a composition including a positive electrode active material and a flexible dispersant to improve the poor dispersion of the positive electrode active material powder and the high viscosity of the slurry during the preparation of the positive electrode slurry.

To achieve the above objective, the present application provides a positive electrode active material composition, a positive electrode plate, a secondary battery, a battery module including the secondary battery, a battery pack including the battery module, and an electric device including the secondary battery, the battery module or the battery pack.

A first aspect of the present application provides a positive electrode active material composition including a positive electrode active material and a dispersant, where the positive electrode active material includes a core and a shell coating the core,

the core includes $Li_{1+x}Mn_{1-y}A_yP_{1-z}R_zO_4$, x=-0.100-0.100, y=0.001-0.500, and z=0.001-0.100; the A is one or more selected from Zn, Al, Na, K, Mg, Mo, W, Ti, V, Zr, Fe, Ni, Co, Ga, Sn, Sb, Nb, and Ge, optionally from Fe, Ti, V, Ni, Co and Mg; the R is one or more selected from B, Si, N and S;

the shell including a first coating layer coating the core and a second coating layer coating the first coating layer, the first coating layer includes a pyrophosphate $MP_2O_7$ and a phosphate $XPO_4$, the M and X are each independently one or more selected from Li, Fe, Ni, Mg, Co, Cu, Zn, Ti, Ag, Zr, Nb or Al;

the second coating layer including carbon;

the dispersant includes a polymer, and the polymer includes:

a first monomeric unit represented by Formula 1;

a second monomeric unit which is at least one selected from the group consisting of a monomeric unit represented by Formula 2 and a monomeric unit represented by Formula 3; and

a third monomeric unit which is at least one selected from the group consisting of a monomeric unit represented by Formula 4 and a monomeric unit represented by Formula 5;

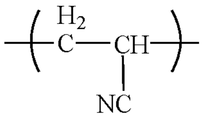

Formula 1

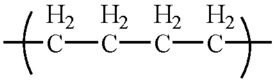

Formula 2

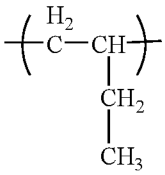

Formula 3

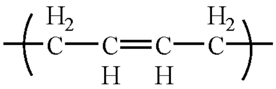

Formula 4

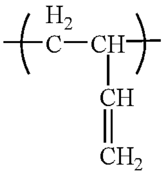

Formula 5.

In some embodiments, with respect to a total mass of the polymer, a mass percentage content of the first monomeric unit is M1, M1 is 10%-55%, optionally 25%-55%.

In some embodiments, with respect to a total mass of the polymer, a mass percentage content of the second monomeric unit is M2, M2 is 40%-80%, optionally 50%-70%.

In some embodiments, with respect to a total mass of the polymer, a mass percentage content of the third monomeric unit is M3, M3 is 0%-10% and optionally 0.001%-2%.

In some embodiments, M3/(M2+M3) is 0%-5%, optionally 0.001%-1%.

In some embodiments, the polymer is hydrogenated nitrile butadiene rubber.

In some embodiments, the polymer has a weight average molar mass of 50,000-500,000, optionally 150,000-350,000.

In some embodiments, with respect to a total mass of the positive electrode active material, the dispersant has a mass percentage content of X1, X1 is 0.05%-1%, optionally 0.1%-0.5%.

In some embodiments, the positive electrode active material composition further includes an infiltrant, the infiltrant has a surface tension of 20 mN/m-40 mN/m, and a molecular structure of the infiltrant includes at least one of the following functional groups: -CN, $-NH_2$, -NH-, -N-, - OH, -C=O, -COO-, -C(=O)-O-C(=O)-.

In some embodiments, the infiltrant includes one or more selected from a small-molecule organic solvent and a low-molecular-weight polymer;

the small-molecule organic solvent includes one or more selected from an alcohol amine compound, an alcohol compound, and a nitrile compounds, optionally, the alcohol amine compound has a carbon atom number of 1-16, optionally 2-6;

the low-molecular-weight polymer includes one or more selected from a maleic anhydride-styrene copolymer, polyvinylpyrrolidone, polysiloxane, optionally, the low-molecular-weight polymer has a weight average molar mass of 6000 or less, optionally 3000-6000.

In some embodiments, with respect to a total mass of the positive electrode active material, a mass percentage content of the infiltrant is X2, X2 is 0.05%-2%, optionally 0.2%-0.8%.

In some embodiments, X1/X2 is 0.05-20, optionally 0.1-1, and further 0.3-0.8.

In some embodiments, phosphate in the first coating layer has a crystal plane spacing of 0.345-0.358 nm and

an angle of 24.25°-26.45° in the crystal direction (111); the pyrophosphate of the first coating layer has a crystal plane spacing of 0.293-0.326 nm and an angle of 26.41°-32.57° in the crystal direction (111).

In some embodiments, the ratio of y to 1-y in the core is 1:10 to 10:1, optionally 1:4 to 1:1.

In some embodiments, the ratio of z to 1-z in the core is 1:9 to 1:999, optionally 1:499 to 1:249.

In some embodiments, the first coating layer has a coating amount greater than 0wt% and less than or equal to 7wt%, optionally 4-5.6wt%, with respect to a weight of the core.

In some embodiments, a weight ratio of pyrophosphate to phosphate in the first coating layer is 1:3 to 3:1, optionally 1:3 to 1:1.

In some embodiments, the pyrophosphate and phosphate each independently has a crystallinity of 10% to 100%, optionally 50% to 100%.

In some embodiments, the second coating layer has a coating amount of greater than 0wt% and less than or equal to 6wt%, optionally 3-5wt%, with respect to a weight of the core.

In some embodiments, the A is at least two selected from Fe, Ti, V, Ni, Co, and Mg.

In some embodiments, the positive electrode active material has a Li/Mn antisite defect concentration of 4% or less, optionally 2% or less.

In some embodiments, the positive electrode active material has a lattice change rate of 6% or less, optionally 4% or less.

In some embodiments, the positive electrode active material has a surface oxygen valence state of -1.88 or less, optionally -1.98 to -1.88.

In some embodiments, the positive electrode active material has a compaction density of 2.0 g/$cm^3$ or higher, optionally 2.2 g/$cm^3$ or higher.

A second aspect of the present application provides a positive electrode slurry including the positive electrode active material composition of the first aspect of the present application; optionally also including one or more of a solvent, a positive electrode conductive agent, and a positive electrode binder.

In some embodiments, the solvent includes N-methylpyrrolidone (NMP).

In some embodiments, the positive electrode binder includes one or more selected from polyvinylidene fluoride (PVDF), polytetrafluoroethylene (PTFE), vinylidene fluoride-tetrafluoroethylene-propylene terpolymers, vinylidene fluoride-hexafluoropropylene-tetrafluoroethylene terpolymers, vinylidene fluoride-hexafluoropropylene copolymers, and fluorinated acrylate resin.

In some embodiments, the positive electrode conductive agent includes one or more selected from superconducting carbon, acetylene black, carbon black, Ketjen black, carbon dots, carbon nanotubes, graphene, and carbon nanofibers.

In some embodiments, the positive electrode slurry has a solid content of 40%-70%, optionally 55%-65%.

In some embodiments, the positive electrode slurry has a viscosity of 3000 mpa.s-50,000 mpa.s at 20°C, optionally 10,000 mpa.s-20,000 mpa.s.

A third aspect of the present application provides a positive electrode plate including a positive electrode current collector and a positive electrode film layer disposed on at least one surface of the positive electrode current collector, the positive electrode film layer includes the positive electrode active material composition of the first aspect of the present application or is made by coating the positive electrode slurry of the second aspect of the present application.

Optionally, a coating method is selected from lifting method, film- pulling method, electrostatic spraying method and spin coating method.

In some embodiments, with respect to a total mass of the positive electrode film layer,

the positive electrode active material has a mass percentage content of W1, W1 is 90%-99.5%, optionally 95%-99%; and/or,

in some embodiments, the dispersant has a mass percentage content of W2, W2 is 1% or less, optionally 0.1%-0.5%; and/or,

in some embodiments, the infiltrant has a mass percentage content of W3, W3 is 2% or less, optionally 0.1%-0.5%; and/or,

in some embodiments, the positive electrode binder has a mass percentage content of W4, W4 is 5.5% or less, optionally 1%-3%; and/or,

In some embodiments, the positive electrode conductive agent has a mass percentage content of W5, W5 is 2.5% or less, optionally 0.1%-1%.

A fourth aspect of the present application provides a secondary battery, which includes the positive electrode

plate of the third aspect of the present application.

A fifth aspect of the present application provides a battery module including the positive electrode plate of the third aspect of the present application, or the secondary battery of the fourth aspect of the present application.

A sixth aspect of the present application provides a battery pack including the positive electrode plate of the third aspect of the present application, the secondary battery of the fourth aspect of the present application, or the battery module of the fifth aspect of the present application.

A seventh aspect of the present application provides an electric device including the positive electrode plate of the third aspect of the present application, or the secondary battery of the fourth aspect of the present application, or the battery module of the fifth aspect of the present application, or the battery pack of the sixth aspect of the present application.

The positive electrode active material composition provided in the present application can solve the problems of poor dispersion of positive electrode active material powder and high viscosity of slurry in the preparation of positive electrode slurry, and improve the processing performance of positive electrode slurry as well as the performance of secondary battery.

## BRIEF DESCRIPTION OF THE DRAWINGS

FIG. 1 exemplarily shows the measurement device and measurement principle of a platinum plate method;

FIG. 2 is a schematic diagram of a secondary battery of an embodiment of the present application;

FIG. 3 is an exploded view of the secondary battery of the embodiment of the present application shown in FIG. 2;

FIG. 4 is a schematic diagram of a battery module of an embodiment of the present application;

FIG. 5 is a schematic diagram of a battery pack of an embodiment of the present application;

FIG. 6 is an exploded view of the battery pack of the embodiment of the present application shown in FIG. 5;

FIG. 7 is a schematic diagram of an electric device utilizing a secondary battery as a power source of an embodiment of the present application;

FIG. 8 exemplarily shows the instrumentation used and test procedure for the positive electrode slurry viscosity tests in an embodiment of the present application; and

FIG. 9 exemplarily shows the method of folding a filter in the slurry filtration performance tests in an embodiment of the present application.

Reference numbers in the drawings are as follows:
1 battery pack; 2 upper container body; 3 lower container body; 4 battery module; 5 secondary battery; 51 casing; 52 electrode assembly; 53 top cover assembly

## DETAILED DESCRIPTION OF THE EMBODIMENTS

The implementations of the present application are described in further detail below in conjunction with the embodiments. The detailed description of the following embodiments is used to exemplarily illustrate the principles of the present application, but is not to be used to limit the scope of the present application, namely, the present application is not limited to the described embodiments.

Hereinafter, embodiments of the positive electrode active material composition, the positive electrode plate, the secondary battery, the battery module, the battery pack and the electric device of the present application will be specifically disclosed. However, unnecessary detailed description may be omitted. For example, detailed descriptions of well-known items and repeated descriptions of substantially the same configurations may be omitted. This is to avoid the following description from becoming unnecessarily lengthy and to facilitate the understanding of those skilled in the art.

The "range" disclosed in the application is defined in the form of lower limit and upper limit, and the given range is limited by selecting a lower limit and an upper limit, and the selected lower limit and upper limit define the boundary of a special range. Ranges defined in this manner may be inclusive or exclusive and may be combined arbitrarily, i.e.,

any lower limit may be combined with any upper limit to form a range. For example, if ranges of 60-120 and 80-110 are listed for a particular parameter, it is understood that ranges of 60-110 and 80-120 are contemplated. Additionally, if the minimum range values 1 and 2 are listed, and if the maximum range values 3, 4, and 5 are listed, the following ranges are all expected: 1-3, 1-4, 1-5, 2- 3, 2-4, and 2-5. In the present application, unless otherwise stated, the numerical range "a-b" represents an abbreviated representation of any combination of real numbers between a and b, where a and b are both real numbers. For example, the numerical range "0-5" indicates that all real numbers between "0-5" have been listed in this article, and "0-5" is only an abbreviated representation of the combination of these values. In addition, when expressing that a certain parameter is an integer ≥ 2, it is equivalent to disclosing that the parameter is an integer such as 2, 3, 4, 5, 6, 7, 8, 9, 10, 11, 12, etc.

Unless otherwise specified, all implementation modes and optional implementation modes of the present application may be combined with each other to form new technical proposals.

Unless otherwise specified, all technical features and optional technical features of the present application may be combined with each other to form new technical proposals.

Unless otherwise specified, all the steps in the present application may be performed sequentially or randomly, preferably sequentially. For example, the method including steps (a) and (b) means that the method may include steps (a) and (b) performed in sequence, and may also include steps (b) and (a) performed in sequence. For example, mentioning that the method may also include step (c), means that step (c) may be added to the method in any order, for example, the method may include steps (a), (b) and (c), may also include steps (a), (c) and (b), and may also include steps (c), (a) and (b).

Unless otherwise specified, "include" and "include" mentioned in the application represent an open type or a closed type. For example, the "include" and " include " may mean that other components not listed may be included or included, or only listed components may be included or included.

Unless otherwise specified, in the present application, the term "or" is inclusive. For example, the phrase "A or B" means "A, B, or both A and B." More specifically, the condition "A or B" is satisfied by either: A is true (or exists) and B is false (or does not exist); A is false (or does not exist) and B is true (or exists); or both A and B are true (or exist).

It should be noted that, herein, the median particle size $Dv_{50}$ is the particle size corresponding to a cumulative volume distribution of 50% of the positive electrode active material. In the present application, the median particle size $Dv_{50}$ of the positive electrode active material can be determined using laser diffraction particle size analysis. For example, with reference to the standard GB/T 19077-2016, a laser particle size analyzer (e.g. Malvern Master Size 3000) is used for the determination.

Herein, the term "coating layer" refers to a layer of material that is coated on the core, and the layer of material may completely or partially coat the core, and the term "coating layer" is used for descriptive purposes only and is not intended to limit the present application. Likewise, the term "thickness of the coating layer" refers to the thickness of the layer of substance coating the core in the radial direction of the core.

Herein, the term "source" refers to a compound that is a source of an element, and as examples, the types of "sources" include, but are not limited to, carbonates, sulfates, nitrates, monomers, halides, oxides, and hydroxides.

[Positive electrode active material composition]

A first aspect of the present application provides a positive electrode active material composition including a positive electrode active material and a dispersant, where

the positive electrode active material includes a core and a shell coating the core,

the core includes $Li_{1+x}Mn_{1-y}A_yP_{1-z}R_zO_4$, x=-0.100-0.100, y=0.001-0.500, and z=0.001-0.100, the A is one or more selected from Zn, Al, Na, K, Mg, Mo, W, Ti, V, Zr, Fe, Ni, Co, Ga, Sn, Sb, Nb, and Ge, optionally from Fe, Ti, V, Ni, Co and Mg, the R is one or more selected from B, Si, N and S;

the shell including a first coating layer coating the core and a second coating layer coating the first coating layer, where,

the first coating layer includes a pyrophosphate $MP_2O_7$ and a phosphate $XPO_4$, the M and X are each independently one or more selected from Li, Fe, Ni, Mg, Co, Cu, Zn, Ti, Ag, Zr, Nb, or Al;

the second coating layer including carbon;

the dispersant includes a polymer, and the polymer includes:

a first monomeric unit represented by Formula 1;

a second monomeric unit which is at least one selected from the group consisting of a monomeric unit represented by Formula 2 and a monomeric unit represented by Formula 3; and

a third monomeric unit which is at least one selected from the group consisting of a monomeric unit represented by Formula 4 and a monomeric unit represented by Formula 5;

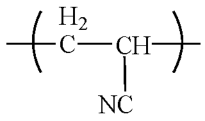

Formula 1

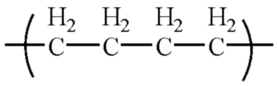

Formula 2

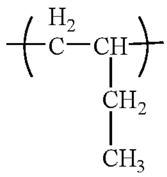

Formula 3

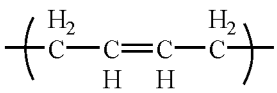

Formula 4

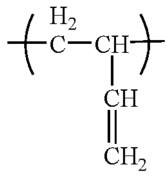

Formula 5.

The inventors found that the ratio between the first, second and third monomeric units may have an effect on the dispersing effect of the dispersant, which in turn affects the flow, viscosity and filtration performance of the positive electrode slurry and may also have an effect on the battery performance.

In some embodiments, with respect to a total mass of the polymer, a mass percentage content of the first monomeric unit is M1, with M1 being 10%-55% (e.g. 10%, 15%, 20%, 25%, 30%, 32%, 35%, 40%, 45%, 50%, or 55%), optionally 25%-55%. The mass percentage content of M1 affects the solubility of the polymer and brittleness of the electrode plate. If the mass percentage content of M1 exceeds 55%, it may lead to poor dispersion and/or poor electrode plate brittleness, and if the mass percentage content of M1 is below 10%, the polymer becomes less soluble in the solvent (e.g., NMP), which in turn makes the slurry inhomogeneous.

In some embodiments, with respect to the total mass of the polymer, a mass percentage content of the second monomeric unit is M2, with M2 being 40%-80% (e.g. 40%, 45%, 50%, 55%, 58%, 60%, 64%, 65%, 68%, 70%, 71%, 75%, or 80%), optionally 50%-70%. The mass percentage content of M2 affects the swelling of the polymer, the mass percentage content of M2 in the range of 40%-80% can ensure the weak polarity of the polymer and a better effect as a dispersant.

In some embodiments, with respect to the total mass of the polymer, the mass percentage content of the third monomeric unit is M3, with M3 being 0%-10% (e.g., 0.001%, 0.005%, 0.01%, 0.05%, 0.1%, 0.3%, 0.4%, 0.5%, 1%, 1.3%, 1.8%, 2%, 3%, 3.8%, 4%, 5%, 5.2%, 6%, 7%, 8%, 9%, or 10%), optionally 0.001%-2%. The mass percentage content of M3 affects the solubility of the polymer and the bonding with the positive electrode current collector (e.g., aluminum foil). If the percentage of M3 is too low, the bonding of the slurry is poor, and if the mass percentage content of M3 is too high, the polymer tends to dissolve in the electrolyte and affects the battery performance.

In some embodiments, M3/(M2+M3) is 0%-5% (e.g., 0.001%, 0.005%, 0.01%, 0.05%, 0.1%, 0.5%, 1%, 2%, 3%, 4%, or 5%), optionally 0.001%-1%.

In some embodiments, the polymer is a random copolymer.

In some embodiments, the polymer is hydrogenated nitrile butadiene rubber.

Nitrile butadiene rubber (NBR) is a random copolymer made by polymerizing acrylonitrile with butadiene monomers (e.g. emulsion polymerization), and its structural general formula is:

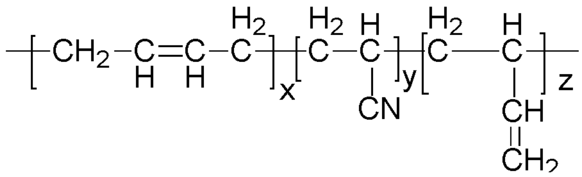

In NBR, the linkage of butadiene (B) and acrylonitrile (A) links is generally BAB, BBA or ABB, and ABA and BBB ternary groups, but with the increase of acrylonitrile content, there are also those who present as a AABAA quintuple linkage, and even become bulk polymers of acrylonitrile. In NBR, the sequence distribution of butadiene is mainly trans-1,4 structure, and its microstructure is related to the polymerization conditions. High polymerization temperatures decrease the trans-1,4 structure and increase the cis-1,4 and 1,2- structures.

Hydrogenated butadiene nitrile rubber (HNBR) is the product obtained by hydrogenation and saturation of the carbon-carbon double bond in the molecular chain of nitrile rubber, so it is also called highly saturated nitrile rubber. The chemical formula of hydrogenated nitrile butadiene rubber is as follows:

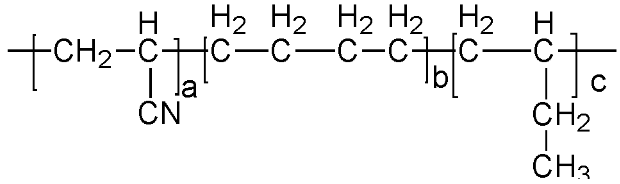

there are three main methods for the preparation of HNBR: ethylene-acrylonitrile copolymerization, NBR solution hydrogenation, and NBR emulsion hydrogenation.

Due to its weak polarity and good affinity with carbon-containing materials, HNBR can act on the particle surface of positive electrode active materials (especially carbon-containing positive electrode active materials) and avoid inter-particle agglomeration through steric hindrance, while HNBR also has high strength and low glass transition temperature, which can improve the flexibility of the electrode plate.

In some embodiments, the polymer has a weight average molar mass of 50,000-500,000 (e.g., 50,000, 60,000, 70,000, 80,000, 90,000, 100,000, 150,000, 200,000, 250,000, 300,000, 350,000, 400,000, 450,000, or 500,000), optionally 150,000-350,000. When the molar mass of the polymer is lower than 50,000, the film-forming property of the slurry is poor, and it is viscoelastic in the positive electrode, and the electrode plate is prone to sticking to the roller when cold pressed; while when the molar mass of the polymer is larger, the solubility of the polymer becomes poor, which is not conducive to the dispersion of the slurry.

The dispersant hydrogenated nitrile butadiene rubber absorbs and swells more in the electrolyte and may affect the room-temperature direct current resistance (DCR) when added in excessive amounts. In some embodiments, with respect to a total mass of the positive electrode active material, the mass percentage of the dispersant is X1, with X1 being 0.05%-1% (e.g., 0.05%, 0.1%, 0.2%, 0.25%, 0.3%, 0.4%, 0.5%, 0.6%, 0.7%, 0.8%, 0.9%, or 1%), optionally 0.1%-0.5%. When X1 is 0.05%-1%, it can provide good dispersion effect, at the same time can avoid too much dispersant addition to affect the room-temperature DCR and influence the energy density of the battery.

In some cases, the positive electrode active material has a poor wettability in NMP (N-methylpyrrolidone) and in turn the slurry stability is poor, as evidenced by low solid content of the slurry, decrease in viscosity after placement, etc., which in turn cannot be used properly. The inventors found that functional groups containing N (such as -CN/-$NH_2$-/-N-, etc.), oxygen (such as -C=O/-COOH/-COOR/epoxy, etc.), or benzene rings have a better affinity for positive electrode active materials (especially those with a highly graphitized carbon coating layer on the surface and with a microporous structure), and small-molecule infiltrant containing these functional groups can effectively improve the wettability of the positive electrode active material in solvents (e.g., N-methylpyrrolidone).

In some embodiments, the positive electrode active material composition further includes an infiltrant, the infiltrant has a surface tension of 20 mN/m-40 mN/m, and the molecular structure of the infiltrant includes at least one (e.g., two or more) of the following functional groups: -CN, -$NH_2$, -NH-, -N-, -OH, -C=O, -COO-, -C(=O)-O- C(=O)-, epoxy group, and phenyl group. The surface tension of the infiltrant can be obtained using a surface tension meter following the measuring methods already known in the art.

An example measuring method can be the platinum plate method, which is based on the principle that when the sensing platinum plate is immersed into the measured liquid, the surface tension around the platinum plate will be

affected, and the surface tension of the liquid will pull the platinum plate down as far as possible. When the surface tension of the liquid and other related forces and the equilibrium force reach an equilibrium, the immersion of the sensing platinum plate in the liquid will stop. At this point, the balance sensor of the instrument measures the immersion depth and translates it into a surface tension value of the liquid.

In the specific testing process, the testing steps of the platinum plate method are: (1) gradually immersing the platinum plate into a liquid; (2) sensing the equilibrium value by the sensor in the state of being immersed beneath the liquid surface; (3) converting the sensed equilibrium value into the surface tension value and displaying the value.

The surface tension is calculated as follows:

$$P = mg + L\gamma \cdot \cos\theta - sh\rho g$$

Equilibrium force = gravity of the plate + sum of surface tension - buoyant force on the plate

(Upward) (Downward) (Upward)

m: Weight of platinum plate

g: Gravity (9.8 N/ Kg)

L : Perimeter of the platinum plate

$\gamma$ : Surface tension of the liquid

$\theta$ : Contact angle between liquid and platinum plate

s : Cross-sectional area of platinum plate

h : Depth of immersion of the platinum plate

$\rho$ : Density of the liquid

FIG. 1 exemplarily shows the measurement device and measurement principle of the platinum plate method.

In some embodiments, the infiltrant includes one or more selected from small-molecule organic solvents and low-molecular-weight polymers.

The small-molecule organic solvent includes one or more selected from alcoholic amines, alcoholic compounds, nitrile compounds, optionally, the alcoholic amines have a carbon atom number of 1-16, optionally 2-6; for example, isopropanolamine, 2-amino-2methyl-1-propanol;

The low-molecular-weight polymer includes one or more selected from maleic anhydride-styrene copolymers, polyvinylpyrrolidone, polysiloxanes, optionally, the low-molecular-weight polymer has a weight average molar mass of 6000 or less, such as 70-6000 (e.g., 70-100, 100-500, 500-1000, 1000-2000, 2000-3000, 3000-4000, 4000-5000, or 5000-6000), optionally 3000-6000.

In some embodiments, with respect to the total mass of the positive electrode active material, the mass percentage content of the infiltrant is X2, with X2 being 0.05%-2% (e.g., 0.05%, 0.1%, 0.2%, 0.3%, 0.4%, 0.5%, 0.6%, 0.7%, 0.8%, 0.9%, 1%, 1.1%, 1.2%, 1.3%, 1.4%, 1.5%, 1.6%, 1.7%, 1.8%, 1.9%, or 2%), and optionally 0.2%-0.8%. When X2 is 0.05%-2%, it can provide a good infiltration effect, but also avoid too much infiltrant addition that can affect the stability of the positive electrode or electrolyte or affect the performance of the battery (e.g. cycling performance).

In some embodiments, X1/X2 is 0.05-20 (e.g., 0.05, 0.1, 0.2, 0.3, 0.4, 0.5, 0.6, 0.7, 0.8, 0.9, 1, 1.1, 1.2, 1.3, 1.4, 1.5, 1.6, 1.7, 1.8, 1.9, 2, 3, 4, 5, 10, 15, or 20), optionally 0.1-1, further 0.3-0.8. When the ratio of the dispersant to the infiltrant is within the above range, the positive electrode slurry has lower viscosity and better flowability and filterability.

The inventors of this application found in actual operation that the manganese exsolution from the lithium manganese phosphate positive electrode active material is relatively serious during intensive charging and discharging

process. Although there are attempts in the existing technology to coat lithium iron phosphate on lithium manganese phosphate so as to reduce the interfacial side reactions, such coating cannot prevent the migration of exsolved manganese into the electrolyte. After the exsolved manganese migrates to the negative electrode, it is reduced to manganese metal. The resulting manganese metal is equivalent to a "catalyst" that catalyzes the decomposition of the SEI film (solid electrolyte interphase) on the positive electrode surface, and the resulting by-products are partly gas, which can easily lead to the expansion of the battery and affect the safety performance of the secondary battery; the other part is deposited on the surface of the negative electrode, which obstructs the passage of lithium ions to and from the negative electrode, causing an increase in the impedance of the secondary battery and affecting the kinetic performance of the battery. In addition, to replace the lost SEI film, the electrolyte and the active lithium inside the cell are continuously consumed, which brings irreversible effects on the capacity retention of the secondary cell.

After extensive research, the inventors found that for lithium manganese phosphate positive electrode active materials, the problems of severe manganese exsolution and high surface reactivity may be caused by the Jahn-Teller effect of $Mn^{3+}$ and the change of $Li_+$ channel size after delithiation. For this reason, the inventors modified lithium manganese phosphate to obtain a positive electrode active material that can significantly reduce the manganese exsolution and reduce the lattice change rate, and thus has good cycling performance, high temperature storage performance and safety performance.

The present application provides a positive electrode active material having a core-shell structure including a core and a shell coating the core,

the core includes $Li_{1+x}Mn_{1-y}A_yP_{1-z}R_zO_4$, x = -0.100-0.100, for example x may be 0.006, 0.004, 0.003, 0.002, 0.001, 0, -0.001, -0.003, -0.004, -0.005, -0.006, -0.007, -0.008, -0.009, - 0.10; y = 0.001-0.500, or example y may be 0.1, 0.2, 0.25, 0.3, 0.35, 0.4, 0.45; and z = 0.001-0.100, for example z may be 0.001, 0.002, 0.003, 0.004, 0.005, 0.006, 0.007, 0.008, 0.009, 0.1; the A is one or more selected from Zn, Al, Na, K, Mg, Mo, W, Ti, V, Zr, Fe, Ni, Co, Ga, Sn, Sb, Nb, and Ge, optionally from Fe, Ti, V, Ni, Co and Mg, the R is one or more selected from B, Si, N and S;

the shell including a first coating layer coating the core and a second coating layer coating the first coating layer, where,

the first coating layer includes a pyrophosphate $MP_2O_7$ and a phosphate $XPO_4$, the M and X are each independently one or more selected from Li, Fe, Ni, Mg, Co, Cu, Zn, Ti, Ag, Zr, Nb, or Al;

the second coating layer including carbon.

Unless otherwise stated, in the above chemical formula, when A is more than two elements, the above limitation for the range of y values is not only for the stoichiometric number of each element as A, but also for the sum of the stoichiometric numbers of each element as A. For example, when A is more than two elements A1 and A2 ......An, the stoichiometric numbers y1 and y2 ......yn of each of A1 and A2 ......An must each fall within the range of values of y defined in this application, and the sum of y1 and y2 ......yn must also fall within the range of the value of y defined in this application. Similarly, in the case where R is more than two elements, the limits of the numerical range of the stoichiometric number of R in this application also have the above meaning.

The lithium manganese phosphate positive electrode active material of this application is a core-shell structure with two coating layers, and the core includes $Li_{1+x}Mn_{1-y}A_yP_{1-z}R_zO_4$, element A doped at the manganese site of lithium manganese phosphate in the core helps reduce the lattice change rate of lithium manganese phosphate during intercalation and deintercalation of lithium, improves the structural stability of the lithium manganese phosphate positive electrode material, greatly reduces manganese exsolution and reduces the oxygen activity on the particle surface. Element R doped at the phosphorus site helps the ease of Mn-O bond length change, thus reducing the lithium-ion migration barrier, promoting lithium-ion migration and improving the rate performance of the secondary battery.

The first coating layer of the positive electrode active material of this application includes pyrophosphate and phosphate. Due to the high migration potential of transition metal in pyrophosphate (>1 eV), it can effectively inhibit the exsolution of transition metal. And phosphate has excellent ability to conduct lithium ions and can reduce the surface tramp lithium content. In addition, the second coating layer is a carbon layer, which can effectively improve the electrical conductivity and desolvation ability of $LiMnPO_4$. In addition, the "barrier" effect of the second coating layer can further prevent the migration of manganese ions into the electrolyte and reduce the corrosion of the active material by the electrolyte.

Therefore, this application can effectively inhibit the Mn exsolution in the process of intercalation and deintercalation of lithium, by specific elemental doping and surface coating of lithium manganese phosphate, and at the same time promote the migration of lithium ions, thus improving the multiplicity performance of the battery and improving the cycle performance and high-temperature performance of the secondary battery.

It should be noted that by comparing the XRD spectra of $LiMnPO_4$ before and after doping in this application,

it can be seen that the positions of the main characteristic peaks of the positive electrode active material in this application are basically the same as those of $LiMnPO_4$ before doping, indicating that the doped lithium manganese phosphate positive electrode active material has no impurity phase and the improvement of the secondary battery performance is mainly from the elemental doping rather than caused by the impurity phase.

In some embodiments, optionally, the phosphate of the first coating layer has a crystal plane spacing of 0.345-0.358 nm and an angle of 24.25°-26.45° in the crystal direction (111); the pyrophosphate of the first coating layer has a crystal plane spacing of 0.293-0.326 nm and an angle of 26.41°-32.57° in the crystal direction (111).

When the crystal plane spacing of phosphate and pyrophosphate in the first coating layer and the angle of crystal direction (111) are in the above range, the impurity phase in the coating layer can be effectively avoided, thus enhancing the gram capacity, cycling performance and rate performance of the material.

In some embodiments, optionally, the ratio of y to 1-y in the core is from 1:10 to 10:1, optionally from 1:4 to 1:1. Here y denotes the sum of the stoichiometric numbers of the Mn-site doping elements. The energy density and cycling performance of the positive electrode active material can be further improved when the above conditions are met.

In some embodiments, optionally, the ratio of z to 1-z in the core is from 1:9 to 1:999, optionally from 1:499 to 1:249. y herein denotes the sum of the stoichiometric numbers of the P-site doping elements. The energy density and cycling performance of the positive electrode active material can be further improved when the above conditions are met.

In some embodiments, optionally, the first coating layer has a coating amount of greater than 0 wt% and less than or equal to 7 wt%, optionally 4-5.6 wt%, with respect to a weight of the core.

When the amount of the first coating layer is within the above range, it can further inhibit the manganese exsolution while further promoting the lithium-ion transport. And it can effectively avoid the following situations: if the coating amount of the first coating layer is too small, it may lead to insufficient inhibition of manganese exsolution by pyrophosphate, while the improvement of lithium-ion transport performance is not significant; if the coating amount of the first coating layer is too large, it may lead to too thick coating layer, increase the impedance of the battery, and affect the kinetic performance of the battery.

In some embodiments, optionally, the weight ratio of pyrophosphate to phosphate in the first coating layer is 1:3 to 3:1, optionally 1:3 to 1:1.

The proper ratio between pyrophosphate and phosphate can help to fully utilize the synergistic effect of the two. And it can effectively avoid the following situations: if there is too much pyrophosphate and too little phosphate, it may lead to an increase in cell impedance; if there is too much phosphate and too little pyrophosphate, the effect of inhibiting manganese exsolution is not significant.

In some embodiments, optionally, the pyrophosphate and phosphate each have a crystallinity of 10% to 100%, optionally 50% to 100%, independently.

In the first coating layer of the lithium manganese phosphate positive electrode active material of the present application, pyrophosphate and phosphate with a certain degree of crystallinity are conducive to maintaining the structural stability of the first coating layer and reducing lattice defects. On the one hand, this is conducive to fully utilizing pyrophosphate in hindering the dissolution of manganese, and on the other hand, it is also conducive to the phosphate in reducing the surface lithium content and the valence of surface oxygen, thus reducing the interfacial side reactions between the positive electrode material and electrolyte, reducing the consumption of electrolyte and improving the cycle performance and safety performance of the battery.

It is to be noted that in the present application, the crystallinity of the pyrophosphate and phosphate may be adjusted, for example, by adjusting the process conditions of the sintering process such as sintering temperature, sintering time, etc. The crystallinity of the pyrophosphates and phosphates can be measured by methods known in the art, for example by X-ray diffraction, density methods, infrared spectroscopy, differential scanning calorimetry and nuclear magnetic resonance absorption methods.

In some embodiments, optionally, the second coating layer has a coating amount of greater than 0 wt% and less than or equal to 6 wt%, optionally 3-5 wt%, with respect to a weight of the core.

As the second coating layer, the carbon layer can play a "barrier" function to avoid the direct contact between the positive electrode active material and the electrolyte, thus reducing the corrosion of the electrolyte on the active material and improving the safety performance of the battery under high temperature. On the other hand, it has a strong electrical conductivity, which can reduce the internal resistance of the battery and thus improve the kinetic performance of the battery. However, because of the low gram capacity of carbon materials, the overall gram capacity of the positive electrode active material may be reduced when the amount of the second coating layer is too large. Therefore, when the amount of the second coating layer is in the above-mentioned range, it can further improve the kinetic performance and safety performance of the battery without sacrificing the gram capacity of the positive electrode active material.

In some embodiments, optionally, the A is at least two selected from Fe, Ti, V, Ni, Co, and Mg.

The simultaneous doping of two or more of the above elements in the manganese sites of the lithium manganese phosphate positive electrode active material is conducive to enhancing the doping effect, further reducing the lattice change rate on the one hand, thereby inhibiting the exsolution of manganese and reducing the consumption of electrolyte

and active lithium, and on the other hand, further reducing the surface oxygen activity and reducing the interfacial side reactions between the positive electrode active material and electrolyte, thereby improving the cycling performance and high-temperature storage performance of the battery.

In some embodiments, optionally, the positive electrode active material has a Li/Mn-antisite defect concentration of 4% or less, optionally 2% or less.

In the positive electrode active material of this application, the Li/Mn-antisite defect refers to the interchange of the positions of $Li^+$ and $Mn^{2+}$ in the $LiMnPO_4$ lattice. Since the $Li^+$ transport channel is a one-dimensional channel, $Mn^{2+}$ is difficult to migrate in the $Li^+$ transport channel, therefore, the $Mn^{2+}$ of the anti-site defect will hinder the $Li^+$ transport. The gram capacity and rate performance of $LiMnPO_4$ can be improved by controlling the concentration of Li/Mn-antisite defects at low levels. In this application, the antisite-defect concentration can be determined, for example, according to JIS K 0131-1996.

In some embodiments, optionally, the positive electrode active material has a lattice change rate of 6% or less, optionally 4% or less.

The process of intercalation and deintercalation of lithium in $LiMnPO_4$ is a two-phase reaction. The interfacial stress of the two phases is determined by the magnitude of the lattice rate of change, and the smaller the lattice rate of change, the lower the interfacial stress and the easier the $Li^+$ transport. Therefore, reducing the lattice rate of change of the core will be beneficial to enhance the transport capacity of $Li^+$ and thus improve the rate performance of the secondary battery.

In some embodiments, optionally, the positive electrode active material has a buckling average discharge voltage of 3.5 V or more and a discharge gram capacity of 140 mAh/g or more; optionally, the average discharge voltage is 3.6 V or more and the discharge gram capacity is 145 mAh/g or more.

Although the average discharge voltage of undoped $LiMnPO_4$ is above 4.0 V, its discharge gram capacity is low, usually less than 120 mAh/g, and therefore, the energy density is low; adjusting the lattice change rate by doping can make its discharge gram capacity increase significantly, and the overall energy density has a significant increase with a slight decrease in the average discharge voltage.

In some embodiments, optionally, the positive electrode active material has a surface oxygen valency of -1.88 or less, optionally -1.98 to -1.88.

This is due to the fact that the higher the valence state of oxygen in a compound, the stronger its electron-gaining ability, i.e., the stronger the oxidation. In the lithium manganese phosphate positive electrode active material of this application, by controlling the surface valence state of oxygen at a lower level, the reactivity on the surface of the positive electrode material can be reduced and the interfacial side reactions between the positive electrode material and the electrolyte can be reduced, thus improving the cycle performance and high temperature storage performance of the secondary battery.

In some embodiments, optionally, the positive electrode active material has a compaction density at 3 tons (T) of 2.0 $g/cm^3$ or more, optionally 2.2 $g/cm^3$ or more.

The higher the compaction density of the positive electrode active material, i.e., the higher the weight per unit volume of the active material, will be more beneficial to improve the volumetric energy density of the battery. In this application, the compaction density can be measured, for example, according to GB/T 24533-2009.

In some embodiments, the positive electrode active material is prepared by a method including the steps of:

a step of providing a core material: the core includes $Li_{1+x}Mn_{1-y}A_yP_{1-z}R_zO_4$, where x=-0.100-0.100, y=0.001-0.500, z=0.001-0.100, the A is one or more selected from Zn, Al, Na, K, Mg, Mo, W, Ti, V, Zr, Fe, Ni, Co, Ga, Sn, Sb, Nb, and Ge, optionally one or more of Fe, Ti, V, Ni, Co and Mg, the R is one or more selected from B, Si, N and S;

coating step: $MP_2O_7$ powder and $XPO_4$ suspension containing a source of carbon are provided, the core material, the $MP_2O_7$ powder are added to the $XPO_4$ suspension containing a source of carbon and mixed, and sintered to obtain a positive electrode active material, wherein the M and X are each independently one or more selected from Li, Fe, Ni, Mg, Co, Cu, Zn, Ti, Ag, Zr, Nb or Al;

The positive electrode active material has a core-shell structure including a core and a shell coating the core, shell including a first coating layer enveloping the core and a second coating layer enveloping the first coating layer, the first coating layer includes pyrophosphate $MP_2O_7$ and phosphate $XPO_4$, the second coating layer including carbon.

In some embodiments, the step of providing the core material includes the steps of:

Step (1): mixing a manganese source, a source of element A and an acid in a container and stirring to obtain manganese salt particles doped with element A;

Step (2): mixing the manganese salt particles doped with element with a source of lithium, a source of phosphorus

and a source of element R in a solvent to obtain a slurry, and sintering under inert gas atmosphere protection to obtain lithium manganese phosphate doped with element A and element R, where the lithium manganese phosphate doped with element A and element R is $Li_{1+x}Mn_{1-y}A_yP_{1-z}R_zO_4$, where x = -0.100-0.100, y = 0.001-0.500, z=0.001-0.100, the A is one or more selected from Zn, Al, Na, K, Mg, Mo, W, Ti, V, Zr, Fe, Ni, Co, Ga, Sn, Sb, Nb and Ge, optionally one or more of Fe, Ti, V, Ni, Co and Mg, the R is one or more selected from B, Si, N and S.

In some embodiments, the step (1) is performed at a temperature of 20-120°C, optionally 25-80°C (e.g., 80°C).

In some embodiments, the stirring in the step (1) is performed at 500-700 rpm (e.g., 600 rpm) for 60-420 minutes, optionally 120-360 minutes (e.g., 360 minutes).

In some embodiments, the source of element A is one or more selected from the monomers of element A, sulfates of element A, halides of element A, nitrates of element A, organic acid salts of element A, oxides of element A, or hydroxides of element A; and/or, the source of element R is one or more selected from the monomers of element R, sulfates of element R, halides of element R, nitrates of element R, organic acid salts of element R, oxides of element R, or hydroxides of element R and inorganic acids of element R.

In some embodiments, the $MP_2O_7$ powder is prepared by:
adding a source of element M and a source of phosphorus a solvent to obtain a mixture, adjusting the pH of the mixture to 4-6 (e.g., 5), stirring and fully reacting, and then obtaining the powder by drying and sintering, where M is one or more selected from Li, Fe, Ni, Mg, Co, Cu, Zn, Ti, Ag, Zr, Nb, or Al. In some embodiments, the drying step is drying at 100-300°C (e.g. 120°C), optionally 150-200°C for 4-8 hrs (e.g. 4 hrs). In some embodiments, the sintering step is sintering at 500-800°C (e.g., 650°C), optionally 650-800°C, under an inert gas atmosphere for 4-10 hrs (e.g. 8 hrs).

In some embodiments, the sintering temperature in the coating step is 500-800°C (e.g., 700°C) and the sintering time is 4-10 hrs (e.g., 6 hrs).

[Positive electrode slurry]

A second aspect of the present application provides a positive electrode slurry including the

positive electrode active material composition of the first aspect of the present application; optionally
also including one or more of a solvent, a positive electrode conductive agent, and a positive electrode binder.

In some embodiments, the solvent includes N-methylpyrrolidone (NMP).

In some embodiments, the positive electrode binder includes one or more selected from polyvinylidene fluoride (PVDF), polytetrafluoroethylene (PTFE), vinylidene fluoride-tetrafluoroethylene-propylene terpolymers, vinylidene fluoride-hexafluoropropylene-tetrafluoroethylene terpolymers, vinylidene fluoride-hexafluoropropylene copolymers, and fluorinated acrylate resin.

In some embodiments, the positive electrode conductive agent includes one or more selected from superconducting carbon, acetylene black, carbon black, Ketjen black, carbon dots, carbon nanotubes, graphene, and carbon nanofibers.

In this application, the solid content of the positive electrode slurry can be enhanced, and/or the viscosity of the positive electrode slurry can be reduced, by selecting a suitable dispersant and/or an infiltrant.

In some embodiments, the positive electrode slurry has a solid content of 40%-70% (e.g., 40%, 45%, 50%, 55%, 58%, 60%, 64%, 65%, 68%, or 70%), optionally 55%-65%.

In some embodiments, the positive electrode slurry has a viscosity of3,000mpa.s-50,000mpa.s at 20°C (e.g. 3000 mpa.s, 4000 mpa.s, 5000 mpa.s, 6000 mpa.s, 7000 mpa.s, 8000 mpa.s, 9000 mpa.s, 10,000 mpa.s, 11000 mpa.s, 12000 mpa.s, 13000 mpa.s, 14000 mpa.s, 15000 mpa.s, 16000 mpa.s, 17000 mpa.s, 18000 mpa.s, 19000 mpa.s, 20000 mpa.s, 30000 mpa.s, 40000 mpa.s, or 50000 mpa.s), and optionally 10,000 mpa.s-20,000 mpa.s.

[Positive electrode plate]

A third aspect of the present application provides a positive electrode plate including a positive electrode current collector and a positive electrode film layer provided on at least one surface of the positive electrode current collector, the positive electrode film layer includes the positive electrode active material composition of the first aspect of the present application or is prepared by coating the positive electrode slurry of the second aspect of the present application. The positive electrode film layer may be disposed on one surface of the positive electrode current collector, or may be provided on both surfaces of the positive electrode current collector.

In some embodiments, with respect to a total mass of the positive electrode film layer,

the mass percentage content of the positive electrode active material is W1, with W1 being 90%-99.5% (e.g., 90%,

91%, 92%, 93%, 94%, 95%, 96%, 97%, 98%, 99%, or 99.5%), optionally 95% -99%; and/or

in some embodiments, the dispersant has a mass percentage content of W2, with W2 being 1% or less (e.g., 0.001%, 0.005%, 0.01%, 0.05%, 0.1%, 0.2%, 0.3%, 0.4%, 0.5%, or 1%), optionally 0.1%-0.5%; and/or

in some embodiments, the infiltrant has a mass percentage content of W3, with W3 being 2% or less (e.g., 0.001%, 0.005%, 0.01%, 0.05%, 0.1%, 0.2%, 0.3%, 0.4%, 0.5%, 1%, or 2%), optionally 0.1%-0.5%; and/or

in some embodiments, the positive electrode binder has a mass percentage content of W4, with W4 being 5.5% or less (e.g., 0.001%, 0.005%, 0.01%, 0.05%, 0.1%, 0.5%, 1%, 1.2%, 1.5%, 2%, 2.3%, 2.5%, 2.7%, 3%, 4%, 5%, or 5.5%), optionally 1% to 3%; and/or,

in some embodiments, the positive electrode conductive agent has a mass percentage content of W5, with W5 being 2.5% or less (e.g., 0.001%, 0.005%, 0.01%, 0.05%, 0.1%, 0.2%, 0.3%, 0.4%, 0.5%, 0.6%, 0.7%, 0.8%, 0.9%, 1%, 2%, or 2.5%), optionally 0.1%-1%.

In some embodiments, the positive electrode current collector may be a metal foil or a composite current collector. For example, as a metal foil, an aluminum foil may be used. The composite current collector may include a base layer of high polymer material and a metal layer formed on at least one surface of the base layer of high polymer material. The composite current collector may be formed by forming a metal material (aluminum, an aluminum alloy, nickel, a nickel alloy, titanium, a titanium alloy, silver and a silver alloy, etc.) on a high polymer base material (such as a base material of polypropylene (PP), polyethylene terephthalate (PET), polybutylene terephthalate (PBT), polystyrene (PS), polyethylene (PE), etc.).

In some embodiments, one or more under-coating layers between the positive electrode current collector and the positive electrode film layer are also provided to increase the bond between the positive electrode current collector and the positive electrode film layer. In some embodiments, the under-coating layer includes a polyacrylic acid-acrylate copolymer (e.g., polyacrylic acid-acrylate copolymer having a weight average molar mass of 300,000-350,000) and a conductive agent (e.g., conductive carbon black (Super P)), the weight ratio between the two may be 60:40-40:60. An exemplary methods of preparation includes: dissolving/dispersing the polyacrylic acid-acrylate copolymer and the conductive agent in deionized water to form a under-coating slurry; applying the under-coating slurry to one or both sides of the positive electrode current collector (e.g., aluminum foil) and drying to obtain a positive electrode current collector with a conductive under-coating layer. In some embodiments, the thickness of the under-coating layer is 1-5 $\mu$m.

In some embodiments, the positive electrode material layer further optionally includes a binder. The type and content of the conductive agent as well as the binder are not specifically limited and can be selected according to actual needs. As an example, the binder may include at least one of polyvinylidene fluoride (PVDF), polytetrafluoroethylene (PTFE), vinylidene fluoride-tetrafluoroethylene-propylene terpolymers, vinylidene fluoride-hexafluoropropylene-tetrafluoroethylene terpolymers, vinylidene fluoride-hexafluoropropylene copolymers, and fluorinated acrylate resin.

In some embodiments, the positive electrode material layer may further optionally include a conductive agent. As an example, the conductive agent may include at least one of superconducting carbon, acetylene black, carbon black, Ketjen black, carbon dots, carbon nanotubes, graphene, and carbon nanofibers.

In some embodiments, the positive electrode plate can be prepared by the following method: dispersing the positive electrode active material, the conductive agent, the binder and any other components in a solvent (e.g., N-methylpyrrolidone) to form a positive electrode slurry; coating the positive electrode slurry on the positive electrode current collector, and after drying and cold pressing, the positive electrode plate can be obtained. Optionally, the coating method is selected from lifting method, film- pulling method, electrostatic spraying method and spin coating method.

A fourth aspect of the present application provides a secondary battery including the positive electrode plate of the third aspect of the present application.

[Negative electrode plate]

In the secondary battery of the present application, the negative electrode plate may include a negative electrode current collector and a negative electrode material layer provided on the negative electrode current collector and including a negative electrode active material, the negative electrode material layer may be provided on one surface of the negative electrode current collector or on both surfaces of the negative electrode current collector.

In some embodiments, the negative electrode current collector may be a metal foil or a composite current collector. For example, as a metal foil, a copper foil may be used. The composite current collector may include a high-polymer-material base layer and a metal layer formed on at least one surface of the high-polymer-material base layer. The composite current collector can be formed by forming a metal material (copper, a copper alloy, nickel, a nickel alloy,

titanium, a titanium alloy, silver and a silver alloy, etc.) on a high-polymer base material (such as a base material of polypropylene (PP), polyethylene terephthalate (PET), polybutylene terephthalate (PBT), polystyrene (PS), polyethylene (PE), etc.).

In some embodiments, the negative electrode active material may be a negative electrode active material for batteries that is well known in the art. As examples, the negative electrode active material may include at least one of the following materials: graphite (e.g., artificial graphite, natural graphite), soft carbon, hard carbon, intermediate phase carbon microspheres, carbon fibers, carbon nanotubes, silicon-based materials, tin-based materials, and lithium titanate. The silicon-based materials may be at least one selected from monolithic silicon, silicon oxide, silicon carbon complexes, silicon nitrogen complexes, and silicon alloys. The tin-based materials can be at least one selected from monolithic tin, tin-oxygen compounds and tin alloys. However, the present application is not limited to these materials, and other conventional materials that can be used as battery negative electrode active materials may also be used. These negative electrode active materials can be used alone or in combination of two or more.

In some embodiments, the negative electrode film layer further optionally includes a binder. The binder may be at least one selected from styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer may further optionally include a conductive agent. The conductive agent may be at least one selected from superconducting carbon, acetylene black, carbon black, Ketjen black, carbon dots, carbon nanotubes, graphene, and carbon nanofibers.

In some embodiments, the negative electrode material layer includes the negative electrode active material of artificial graphite, the conductive agent of acetylene black, and the binder of styrene-butadiene rubber (SBR).

In some embodiments, the negative electrode material layer optionally also includes other additives, such as thickeners (e.g., sodium carboxymethyl cellulose (CMC-Na)), etc.

In some embodiments, the negative electrode plate may be prepared by: dispersing the above components for preparing a negative electrode plate, such as the negative electrode active material, the conductive agent, the binder and any other components in a solvent (e.g., deionized water) to form a negative electrode slurry; coating the negative electrode slurry on the negative electrode current collector, and after drying and cold pressing, the negative electrode plate can be obtained.

[Separator]

In the secondary battery of the present application, the separator is disposed between the positive electrode and negative electrode plates for separation. In this regard, the type of the separator is not specifically limited, and any well-known porous structure separator with good chemical stability and mechanical stability can be used. In some embodiments, the material of the separator may be at least one selected from glass fiber, nonwoven, polyethylene, polypropylene and polyvinylidene fluoride. The separator may be a single-layer membrane or a multi-layer composite membrane, without any particular limitation. Where the separator is a multi-layer composite membrane, the materials of the layers may be the same or different, with no particular limitations.

The secondary battery of the present application may be a lithium-ion battery.

The secondary battery of the present application may be prepared using conventional methods. In some embodiments, the positive electrode plate, the negative electrode plate, and the separator may be made into an electrode assembly by a winding process or a laminating process. An exemplary preparation method includes:

Step 1: stacking a positive electrode plate, a separator and a negative electrode plate sequentially so that the separator is between the positive electrode and the negative electrode plates, and then winding to obtain the electrode assembly; and

Step 2: placing the electrode assembly in a secondary battery casing, drying and injecting with electrolyte, and then the secondary battery is made after a chemical formation and resting process.

In some embodiments, the secondary battery of the present application may include an outer packaging. The outer packaging may be used to encapsulate the above-mentioned electrode assembly and electrolyte.

In some implementations, the outer packaging of the secondary battery may be a hard casing, such as a hard plastic casing, aluminum casing, steel casing, etc. The outer packaging of the secondary battery may also be a soft pack, such as a pouch-type soft pack. The material of the soft pack may be plastic, exemplarily polypropylene, polybutylene terephthalate, and polybutylene succinate.

The shape of the secondary battery of the present application is not particularly limited, which may be cylindrical, square, or any other shape. For example, FIG. 6 shows as an example a secondary battery 5 with a square structure.

In some embodiments, referring to FIG. 7, the outer packaging may include a casing 51 and a top cover assembly 53. wherein the casing 51 may include a bottom plate and side plates connected to the bottom plate, the bottom plate and the side plates enclosing a receiving cavity. The casing 51 has an opening connected to the receiving cavity, and the top cover assembly 53 can be provided over the opening to close the receiving cavity. The positive electrode plate, the negative electrode plate, and the separator may be wound or laminated to form an electrode assembly 52, which is encapsulated in the receiving cavity. An electrolyte is infiltrated into the electrode assembly 52. The number of electrode assemblies 52 contained in the secondary battery 5 may be one or more, which may be selected by a person skilled in the art according to specific practical needs.

In some embodiments, the secondary battery can be assembled into a battery module, and the number of secondary batteries contained in the battery module can be one or more, with the specific number being selected by those skilled in the art based on the application and capacity of the battery module.

FIG. 4 shows, as an example, a battery module 4. Referring to FIG. 4, in the battery module 4, a plurality of secondary batteries 5 may be arranged sequentially along a length of the battery module 4. Of course, they can also be arranged in any other way. Further, the plurality of secondary batteries 5 may be secured by fasteners.

Optionally, the battery module 4 may also include a housing having an accommodating space in which a plurality of secondary batteries 5 are accommodated.

In some embodiments, the above battery modules may also be assembled into a battery pack, and the number of battery modules contained in the battery pack can be one or more, the specific number of which can be selected by a person skilled in the art according to the application and capacity of the battery pack.

FIGS. 5 and 6 show, as an example, a battery pack 1. Referring to FIGS. 5 and 6, the battery pack 1 may include a battery container and a plurality of battery modules 4 disposed in the battery container. the battery container includes an upper container body 2 and a lower container body 3, and the upper container body 2 is able to be covered by the lower container body 3 and form an enclosed space for accommodating the battery modules 4. A plurality of battery modules 4 can be arranged in the battery container in any manner.

Further, the present application provides an electric device, and the electric device includes the secondary battery, the battery module, or the battery pack provided in the present application. The secondary battery, the battery module, or the battery pack may be used as a power source for the electric device or may be used as an energy storage unit for the electric device. The electric device may be selected from, but not limited to, mobile devices (e.g., cell phones, laptops, etc.), electric vehicles (e.g., pure electric vehicles, hybrid electric vehicles, plug-in hybrid electric vehicles, electric bicycles, electric scooters, electric golf carts, electric trucks, etc.), electric trains, ships and satellites, energy storage systems, etc. As an electric device, the secondary battery, the battery module or the battery pack may be selected according to application needs.

FIG. 7 shows as an exemplary electric device. The electric device is a pure electric vehicle, a hybrid electric vehicle, or a plug-in hybrid electric vehicle, etc. To meet the high power and high energy density requirements of the secondary battery for this electric device, a battery pack or battery module may be used.

As another example the device may be a cell phone, tablet, laptop, etc. The device usually requires thinness and lightness and may employ a secondary battery as a power source.

## Examples

Hereinafter, examples of the present application are described. The examples described below are exemplary and are intended to explain the present application only and are not to be construed as limiting the present application. Where specific techniques or conditions are not indicated in the examples, the techniques or conditions described in the literature in the art or in accordance with the product specification are followed. Where the reagents or instruments used are not specified as manufacturers, they are conventional products that can be obtained commercially.

The sources of raw materials used in examples of this application are as follows:

| Name | Chemical formula | Manufacturers | Specification |
|---|---|---|---|
| Manganese carbonate | $MnCO_3$ | Shandong West Asia Chemical Industry Co. | 1Kg |
| Lithium carbonate | $Li_2CO_3$ | Shandong West Asia Chemical Industry Co. | 1Kg |
| Magnesium carbonate | $MgCO_3$ | Shandong West Asia Chemical Industry Co. | 1Kg |

(continued)

| Name | Chemical formula | Manufacturers | Specification |
|---|---|---|---|
| Zinc carbonate | $ZnCO_3$ | Wuhan Xinru Chemical Co. | 25Kg |
| Ferrous carbonate | $FeCO_3$ | Xi'an Lanzhiguang Fine Material Co. | 1Kg |
| Nickel Sulfate | $NiCO_3$ | Shandong West Asia Chemical Industry Co. | 1Kg |
| Titanium sulfate | $Ti(SO_4)_2$ | Shandong West Asia Chemical Industry Co. | 1Kg |
| Cobalt Sulfate | $CoSO_4$ | Xiamen Zhixin Chemical Co. | 500g |
| Vanadium dichloride | $VCl_2$ | Shanghai Jinjinle Industrial Co. | 1Kg |
| Oxalic acid dihydrate | $C_2H_2O_4{\cdot}2H_2O$ | Shanghai Jinjinle Industrial Co. | 1Kg |
| Ammonium dihydrogen phosphate | $NH_4H_2PO_4$ | Shanghai Cheng Shao Biotechnology Co. | 500g |
| Sucrose | $C_{12}H_{22}O_{11}$ | Shanghai Yuanye Biotechnology Co. | 100g |
| Sulfuric acid | $H_2SO_4$ | Shenzhen Haishian Biotechnology Co. | Mass fraction 60% |
| Nitric acid | $HNO_3$ | Anhui Lingtian Fine Chemical Co. | Mass fraction 60% |
| Silicic acid | $H_2SiO_3$ | Shanghai Yuanye Biotechnology Co. | 100g |
| Boric acid | $H_3BO_3$ | Changzhou Qidi Chemical Co. | 1Kg |

**Example 1-1**

[Preparation of double-coating-layer lithium manganese phosphate positive electrode active material]

**(1) Preparation of co-doped lithium manganese phosphate core**

**Preparation of Fe, Co and V co-doped manganese oxalate:** 689.5 g of manganese carbonate (as MnCOs, same below), 455.2 g of ferrous carbonate (as FeCOs, same below), 4.6 g of cobalt sulfate (as $CoSO_4$, same below) and 4.9 g of vanadium dichloride (as $VCl_2$, same below) were thoroughly mixed in a mixer for 6 hrs. The mixture was transferred to a reactor and 5 liters of deionized water and 1260.6 g of oxalic acid dihydrate (as $C_2H_2O_4.2H_2O$, the same below) were added. The reactor was heated to 80°C and stirred at 600 rpm for 6 hrs until the reaction was terminated (no bubbles were generated) to obtain a suspension of Fe, Co, V and S co-doped manganese oxalate. Then the suspension was filtered and the filter cake was dried at 120°C, after which it was ground to obtain Fe, Co and V co-doped manganese oxalate dihydrate particles with a median particle size $Dv_{50}$ of 100 nm.

**Preparation of Fe, Co, V and S co-doped lithium manganese phosphate:** the manganese oxalate particles dihydrate obtained in the previous step (1793.4 g), 369.0 g lithium carbonate (as $Li_2CO_3$, the same below), 1.6 g dilute sulfuric acid with a concentration of 60% (as 60% $H_2SO_4$, the same below) and 1148.9 g ammonium dihydrogen phosphate (as $NH_4H_2PO_4$, the same below) were added to 20 liters of deionized water. The mixture was stirred for 10 hrs to evenly mix to obtain a slurry. The slurry was transferred to a spray drying equipment for spray drying granulation at a drying temperature of 250°C for 4 hrs to obtain powder. The above powder was sintered at 700°C for 4 hrs in a protective atmosphere of nitrogen (90 vol%) + hydrogen (10 vol%) to obtain 1572.1 g of Fe, Co, V and S co-doped lithium manganese phosphate.

**(2) Preparation of lithium iron pyrophosphate and lithium iron phosphate**

**Preparation of lithium iron pyrophosphate powder:** 4.77 g of lithium carbonate, 7.47 g of ferrous carbonate, 14.84 g of ammonium dihydrogen phosphate and 1.3 g of oxalic acid dihydrate were dissolved in 50 mL of deionized water. The pH of the mixture was 5, and the reaction mixture was stirred for 2 hrs to fully react. Then the reacted solution was heated up to 80°C and kept at this temperature for 4 hrs to obtain a suspension containing $Li_2FeP_2O_7$, the suspension was filtered, washed with deionized water and dried at 120°C for 4 hrs to obtain a powder. The powder was sintered at 650°C under a nitrogen atmosphere for 8 hrs and naturally cooled to room temperature and then ground to obtain $Li_2FeP_2O_7$ powder.

**Preparation of lithium iron phosphate suspension:** 11.1 g of lithium carbonate, 34.8 g of ferrous carbonate, 34.5 g of ammonium dihydrogen phosphate, 1.3 g of oxalic acid dihydrate and 74.6 g of sucrose (as $C_{12}H_{22}O_{11}$, same below) were dissolved in 150 mL of deionized water to obtain a mixture, and then stirred for 6 hrs to make the above mixture fully react. Then the reacted solution was heated up to 120°C and kept at this temperature for 6 hrs to obtain a suspension containing $LiFePO_4$.

**(3) Coating**

1572.1 g of the above Fe, Co, V and S co-doped lithium manganese phosphate and 15.72 g of the above lithium iron pyrophosphate ($Li_2FeP_2O_7$) powder were added to the lithium iron phosphate ($LiFePO_4$) suspension prepared in the previous step, stirred and mixed well, and then transferred to a vacuum oven and dried at 150°C for 6 hrs. The resulting product was then dispersed by sand grinding. After dispersion, the resulting product was sintered in a nitrogen atmosphere at 700°C for 6 hrs to obtain the target product of double-layer coated lithium manganese phosphate.

**[Preparation of positive electrode plate]**

The above-prepared double-layer coated lithium manganese phosphate positive electrode active material, conductive agent acetylene black, and binder polyvinylidene fluoride (PVDF) were added to N-methylpyrrolidone (NMP) in the ratio of 92:2.5:5.5 by weight, stirred and mixed well to obtain a positive electrode slurry. Then the positive electrode slurry was uniformly coated on an aluminum foil according to 0.280 g/1540.25 $mm^2$, dried, cold pressed and slit to obtain a positive electrode plate.

**[Preparation of negative electrode plate]**

A negative electrode active substance of artificial graphite, hard carbon, conductive agent of acetylene black, a binder of styrene butadiene rubber (SBR), and a thickener of sodium carboxymethyl cellulose (CMC-Na) were dissolved in solvent deionized water according to the weight ratio of 90:5:2:2:1, mixed well and prepared into a negative electrode slurry. The negative electrode slurry was uniformly coated on a negative electrode current collector of copper foil according to 0.117 g/1540.25 $mm^2$, and a negative electrode plate was obtained after drying, cold pressing and slitting.

**[Preparation of electrolyte]**

In an argon atmosphere glove box ($H_2O$ < 0.1 ppm, $O_2$ < 0.1 ppm), as an organic solvent, ethylene carbonate (EC)/methylene carbonate (EMC) was mixed well in a volume ratio of 3/7, and 12.5wt% (with respect to a weight of the organic solvent) $LiPF_6$ was added to dissolve in the above organic solvent and stirred well to obtain an electrolyte.

**[Separator]**

Commercially available PP-PE copolymer microporous films with a thickness of 20 μm and an average pore size of 80 nm (from Tricor Electronics Technology, model 20) were used.

**[Preparation of full battery]**

The positive electrode plate, the separator and the negative electrode plate obtained above were stacked in order, so that separator was disposed between the positive electrode and negative electrode plates for isolation, and the bare battery was obtained by winding. The bare battery was placed in an outer packaging, filled with the above electrolyte and encapsulated to obtain a full battery (also referred to as "full cell" hereinafter).

**[Preparation of button battery]**

The above-prepared double-layer coated lithium manganese phosphate positive electrode active material, PVDF and acetylene black were added to NMP in a weight ratio of 90:5:5 and stirred in a drying room to make a slurry. The above slurry was coated on an aluminum foil, dried and cold pressed to form a positive electrode plate. The coating amount was 0.02 $g/cm^2$, and the compacted density was 2.0 $g/cm^3$.

A lithium plate was used as the negative electrode, and a solution of 1 mol/L $LiPF_6$ in ethylene carbonate (EC) + diethyl carbonate (DEC) + dimethyl carbonate (DMC) at a volumetric ratio of 1:1:1 was used as the electrolyte, which was assembled with the above prepared positive electrode plate in a button cell container to form a button battery (also referred to as "button cell" hereinafter).

**Example 1-2 to Example 1-6**

In the preparation of the co-doped lithium manganese phosphate core, the conditions for the preparation of the lithium manganese phosphate cores in Example 1-2 to Example 1-6 were the same as in Example 1-1 except that vanadium dichloride and cobalt sulfate were not used, and 463.4 g of ferrous carbonate, 1.6 g of 60% dilute sulfuric acid, 1148.9 g of ammonium dihydrogen phosphate, and 369.0 g of lithium carbonate were used.

In addition, during the preparation of lithium iron pyrophosphate and lithium iron phosphate and the process of coating the first coating layer and the second coating layer, except that the amount of raw materials used was adjusted according to the ratio of the coating amount shown in Table 1 to the coating amount in Example 1-1, such that the amounts of $Li_2FeP_2O_7/LiFePO_4$ in Examples 1-2 to 1-6 were 12.6 g/37.7 g, 15.7 g/47.1 g, 18.8 g/56.5 g, 22.0/66.0 g and 25.1 g/75.4 g, respectively, and the amount of sucrose in Examples 1-2 to 1-6 was 37.3g, other conditions were the same as in Example 1-1.

**Example 1-7 to Example 1-10**

The conditions of Examples 1-7 to 1-10 were the same as those in Example 1-3 except that the amounts of sucrose were 74.6 g, 149.1 g, 186.4 g, and 223.7 g, respectively, so that the corresponding amounts of the carbon layer as the second coating layer were 31.4 g, 62.9 g, 78.6 g, and 94.3 g, respectively.

**Example 1-11 to Example 1-14**

The conditions of Examples 1-11 to 1-14 were the same as those in Example 1-7 except that the amounts of various raw materials were adjusted in the preparation of lithium iron pyrophosphate and lithium iron phosphate corresponding to the coating amounts shown in Table 1 so that the amounts of $Li_2FeP_2O_7/LiFePO_4$ were 23.6 g/39.3 g, 31.4 g/31.4 g, 39.3 g/23.6 g, and 47.2 g/15.7 g, respectively.

**Example 1-15**

The conditions of Example 1-15 were the same as those in Example 1-14 except that 492.80 g ZnCOs was used instead of ferrous carbonate in the preparation of the co-doped lithium manganese phosphate core.

**Example 1-16 to Example 1-18**

Except that 466.4 g of $NiCO_3$, 5.0 g of zinc carbonate, and 7.2 g of titanium sulfate were used instead of ferrous carbonate during the preparation of the co-doped lithium manganese phosphate core in Example 1-16, 455.2 g of ferrous carbonate and 8.5 g of vanadium dichloride were used during the preparation of the co-doped lithium manganese phosphate core in Example 1-17, and 455.2 g of ferrous carbonate, 4.9 g of vanadium dichloride, and 2.5 g of magnesium carbonate were used during the preparation of the co-doped lithium manganese phosphate core in Example 1-18, other conditions in Examples 1-17 to 1-19 were the same as those in Example 1-7.

**Example 1-19 to Example 1-20**

Except that 369.4 g of lithium carbonate was used and 1.05 g of 60% dilute nitric acid was used instead of dilute sulfuric acid in the preparation of co-doped lithium manganese phosphate core in Example 1-19, and 369.7 g of lithium carbonate was used and 0.78 g of silicate was used instead of dilute sulfuric acid in the preparation of co-doped lithium manganese phosphate core in Examples 1-20, other conditions in Examples 1-19 to 1-20 were the same as those in Example 1-18.

**Example 1-21 to Example 1-22**

Except that 632.0 g of manganese carbonate, 463.30 g of ferrous carbonate, 30.5 g of vanadium dichloride, 21.0 g of magnesium carbonate, and 0.78 g of silicic acid were used in the preparation of co-doped lithium manganese phosphate core in Example 1-21, and 746.9 g of manganese carbonate, 289.6 g of ferrous carbonate, 60.9 g of vanadium dichloride, 42.1 g of magnesium carbonate, and 0.78 g of silicic acid were used in the preparation of the co-doped lithium phosphate core, in Example 1-22, other conditions in Examples 1-21 to 1-22 were the same as those in Example 1-20.

**Example 1-23 to Example 1-24**

Except that 804.6 g of manganese carbonate, 231.7 g of ferrous carbonate, 1156.2 g of ammonium dihydrogen phosphate, 1.2 g of boric acid (99.5% by mass fraction), and 370.8 g of lithium carbonate were used in the preparation of the co-doped lithium manganese phosphate core in Example 1-23; 862.1 g of manganese carbonate, 173.8 g of ferrous carbonate, 1155.1 g of ammonium dihydrogen phosphate, 1.86 g of boric acid (99.5% by mass), and 371.6 g of lithium carbonate were used in Example 1-24, other conditions in Examples 1-23 to 1-24 were the same as those in Example 1-22.

**Example 1-25**

Except that 370.1 g of lithium carbonate, 1.56 g of silicic acid, and 1147.7 g of ammonium dihydrogen phosphate were used in the preparation of the co-doped lithium manganese phosphate core in Example 1-25, other conditions in Example 1-25 were the same as those in Example 1-20.

**Example 1-26**

Except that 368.3 g of lithium carbonate, 4.9 g of dilute sulfuric acid with a mass fraction of 60%, 919.6 g of manganese carbonate, 224.8 g of ferrous carbonate, 3.7 g of vanadium dichloride, 2.5 g of magnesium carbonate, and 1146.8 g of ammonium dihydrogen phosphate were used in the preparation of the co-doped lithium manganese phosphate core in Example 1-26, other conditions in Example 1-26 were the same as those in Example 1-20.

**Example 1-27**

Except that 367.9 g of lithium carbonate, 6.5 g of dilute sulfuric acid at a concentration of 60%, and 1145.4 g of ammonium dihydrogen phosphate were used in the preparation of the co-doped lithium manganese phosphate core in Example 1-27, other conditions in Example 1-27 were the same as those in Example 1-20.

**Example 1-28 to Example 1-33**

Other conditions in Examples 1-28 to 1-33 were the same as those in Example 1-20, except that, in the preparation of co-doped lithium manganese phosphate core, 1034.5g of manganese carbonate, 108.9g of ferrous carbonate, 3.7g of vanadium dichloride, and 2.5g of magnesium carbonate were used, and the amounts of lithium carbonate were 367.6g, 367.2g, 366.8g, 366.4g, 366.0g and 332.4g, respectively, the amounts of ammonium dihydrogen phosphate were 1144.5g, 1143.4g, 1142.2g, 1141.1g, 1139.9g and 1138.8g, respectively, and the amounts of dilute sulfuric acid with a concentration of 60% were 8.2 g, 9.8 g, 11.4 g, 13.1 g, 14.7 g, and 16.3 g, respectively.

**Example 2-1 to Example 2-4**

**Example 2-1**

Except that in the preparation of lithium iron pyrophosphate ($Li_2FeP_2O_7$), the sintering temperature in the powder sintering step was 550°C and the sintering time was 1 hr to control the crystallinity of $Li_2FeP_2O_7$ to 30%, and in the preparation of lithium iron phosphate ($LiFePO_4$) the sintering temperature in the coating and sintering step was 650°C and the sintering time was 2 hrs to control the crystallinity of $LiFePO_4$ to 30%, other conditions were the same as those in Example 1-1.

**Example 2-2**

Except that in the preparation of lithium iron pyrophosphate ($Li_2FeP_2O_7$), the sintering temperature in the powder sintering step was 550°C and the sintering time was 2h to control the crystallinity of $Li_2FeP_2O_7$ to 50%, and in the preparation of lithium iron phosphate ($LiFePO_4$) the sintering temperature in the coating and sintering step was 650°C and the sintering time was 3 hrs to control the crystallinity of $LiFePO_4$ to 50%, other conditions were the same as in Example 1-1.

**Example 2-3**

Except that in the preparation of lithium iron pyrophosphate ($Li_2FeP_2O_7$), the sintering temperature in the powder

sintering step was 600°C and the sintering time was 2 hrs to control the crystallinity of $Li_2FeP_2O_7$ to 70%, and in the preparation of lithium iron phosphate ($LiFePO_4$) the sintering temperature in the coating and sintering step was 650°C and the sintering time was 4 hrs to control the crystallinity of $LiFePO_4$ to 70%, other conditions were the same as in Example 1-1.

**Example 2-4**

Except that in the preparation of lithium iron pyrophosphate ($Li_2FeP_2O_7$), the sintering temperature in the powder sintering step was 650°C and the sintering time was 4 hrs to control the crystallinity of $Li_2FeP_2O_7$ to 100%, and in the preparation of lithium iron phosphate ($LiFePO_4$) the sintering temperature in the coating and sintering step was 700°C and the sintering time was 6 hrs to control the crystallinity of $LiFePO_4$ to 100%, other conditions were the same as in Example 1-1.

**Example 3-1 to Example 3-12**

Other conditions of Examples 3-1 to 3-12 were the same as those in Example 1-1, except that in the process of preparing Fe, Co and V co-doped manganese oxalate particles, the heating temperature/stirring time in the reactor was 60°C/120 minutes, respectively in Example 3-1; the heating temperature/stirring time in the reactor was 70°C/120 minutes, respectively in Example 3-2; the heating temperature/stirring time in the reactor was 80°C/120 minutes, respectively in Example 3-3; the heating temperature/stirring time in the reactor was 90°C/120 minutes, respectively in Example 3-4; the heating temperature/stirring time in the reactor was 100°C/120 minutes, respectively in Example 3-5; the heating temperature/stirring time in the reactor was 110°C/120 minutes, respectively in Example 3-6; the heating temperature/stirring time in the reactor was 120°C/120 minutes, respectively in Example 3-7; the heating temperature/stirring time in the reactor was 130°C/120 minutes, respectively in Example 3-8; the heating temperature/stirring time in the reactor was 100°C/60 minutes, respectively in Example 3-9; the heating temperature/stirring time in the reactor was 100°C/90 minutes, respectively in Example 3-10; the heating temperature/stirring time in the reactor was 100°C/150 minutes, respectively in Example 3-11; the heating temperature/stirring time in the reactor was 100°C/180 minutes, respectively in Example 3-12.

**Example 4-1 to Example 4-7**

**Example 4-1 to Example 4-4:** other conditions were the same as those in Example 1-7, except that the drying temperature/drying time in the drying step during the preparation of lithium iron pyrophosphate ($Li_2FeP_2O_7$) were 100°C/4 hrs, 150°C/6 hrs, 200°C/6 hrs, and 200°C/6 hrs, respectively; and the sintering temperature and sintering time in the sintering step during the preparation of lithium iron pyrophosphate ($Li_2FeP_2O_7$) were 700°C/6 hrs, 700°C/6 hrs, 700°C/6 hrs, and 600°C/6 hrs, respectively.

**Example 4-5 to Example 4-7:** other conditions were the same as those in Example 1-12, except that the drying temperature/drying time in the drying step during the coating process were 150°C/6 hrs, 150°C/6h and 150°C/6 hrs, respectively; and the sintering temperature and sintering time in the sintering step during the coating process are 600°C/4 hrs, 600°C/6 hrs, and 800°C/8 hrs, respectively.

**Comparative Example 1**

**Preparation of carbon-coated lithium manganese phosphate:** 1149.3 g of manganese carbonate was added to the reactor with 5 liters of deionized water and 1260.6 g of oxalic acid dihydrate (as $C_2H_2O_4 \cdot 2H_2O$, same below). The reactor was heated to 80°C and stirred at 600 rpm for 6 hrs until the reaction was terminated (no bubbles were produced) to obtain a manganese oxalate suspension, then the suspension was filtered and the filter cake was dried at 120°C, after which it was ground to obtain manganese oxalate dihydrate particles with a median particle size $Dv_{50}$ of 100 nm.

**Preparation of carbon-coated lithium manganese phosphate:** 1789.6 g of manganese oxalate particles dihydrate obtained above, 369.4 g of lithium carbonate (as $Li_2CO_3$, same below), 1150.1 g of ammonium dihydrogen phosphate (as $NH_4H_2PO_4$, same below), and 31 g of sucrose (as $C_{12}H_{22}O_{11}$, same below) were added to 20 liters of deionized water, and the mixture was stirred for 10 hrs to make it mixed well to obtain a slurry. The slurry was transferred to spray drying equipment for spray drying and granulation, the drying temperature was 250°C and drying for 4 hrs to obtain the powder. The above powder was sintered at 700°C for 4 hrs in a protective atmosphere of nitrogen (90 vol%) + hydrogen (10 vol%) to obtain the carbon coated lithium manganese phosphate.

**Comparative Example 2**

The conditions in Comparative Example 2 were the same as those in Comparative Example 1 except that 689.5 g of manganese carbonate was used and an additional 463.3 g of ferrous carbonate was added.

**Comparative Example 3**

The conditions in Comparative Example 3 were the same as those in Comparative Example 1 except that 1148.9 g of ammonium dihydrogen phosphate and 369.0 g of lithium carbonate were used, and an additional 1.6 g of dilute sulfuric acid at a concentration of 60% was added.

**Comparative Example 4**

The conditions in Comparative Example 4 were the same as those in Comparative Example 1 except that 689.5 g of manganese carbonate, 1148.9 g of ammonium dihydrogen phosphate, and 369.0 g of lithium carbonate were used, and 463.3 g of ferrous carbonate and 1.6 g of 60% dilute sulfuric acid were additionally added.

**Comparative Example 5**

The conditions in Comparative Example 5 were the same as those in Comparative Example 4 except that the following steps were additionally added: **Preparation of lithium iron pyrophosphate powder:** 9.52 g of lithium carbonate, 29.9 g of ferrous carbonate, 29.6 g of ammonium dihydrogen phosphate, and 32.5 g of oxalic acid dihydrate were dissolved in 50 mL of deionized water. The pH of the mixture was 5, and the reaction mixture was stirred for 2 hrs to fully react. Then the reacted solution was warmed up to 80°C and kept at that temperature for 4 hrs to obtain a suspension containing $Li_2FeP_2O_7$, and the suspension was filtered, washed with deionized water and dried at 120°C for 4 hrs to obtain a powder. The powder was sintered at 500°C under nitrogen atmosphere for 4 hrs and naturally cooled to room temperature followed by grinding, the crystallinity of $Li_2FeP_2O_7$ was controlled to be 5%, and 62.8 g of $Li_2FeP_2O_7$ was used when preparing the carbon-coated material.

**Comparative Example 6**

The conditions in Comparative Example 6 were the same as those in Comparative Example 4 except that the following steps were additionally added: **Preparation of lithium iron pyrophosphate suspension:** 14.7 g of lithium carbonate, 46.1 g of ferrous carbonate, 45.8 g of ammonium dihydrogen phosphate, and 50.2 g of oxalic acid dihydrate were dissolved in 500 mL of deionized water, stirred for 6 hrs to fully react. Then the reacted solution was warmed up to 120°C and kept at that temperature for 6 hrs to obtain a suspension $LiFePO_4$. In the preparation of lithium iron phosphate ($LiFePO_4$), the sintering temperature in the coating sintering step was 600°C and the sintering time was 4 hrs to control the crystallinity of $LiFePO_4$ to be 8%, and 62.8 g of $LiFePO_4$ was used when preparing the carbon-coated material.

**Comparative Example 7**

**Preparation of lithium iron pyrophosphate powder:** 2.38 g of lithium carbonate, 7.5 g of ferrous carbonate, 7.4 g of ammonium dihydrogen phosphate and 8.1 g of oxalic acid dihydrate were dissolved in 50 mL of deionized water. The pH of the mixture was 5, and the reaction mixture was stirred for 2 hrs to make it fully reacted. Then the reacted solution was heated up to 80°C and kept at that temperature for 4 hrs to obtain a suspension containing $Li_2FeP_2O_7$. The suspension was filtered, washed with deionized water and dried at 120°C for 4 hrs to obtain a powder. The powder was sintered at 500°C under nitrogen atmosphere for 4 hrs and naturally cooled to room temperature and then ground to control the crystallinity of $Li_2FeP_2O_7$ to 5%.

**Preparation of lithium iron phosphate suspension:** 11.1 g of lithium carbonate, 34.7 g of ferrous carbonate, 34.4 g of ammonium dihydrogen phosphate, 37.7 g of oxalic acid dihydrate and 37.3 g of sucrose (as $C_{12}H_{22}O_{11}$, same below) were dissolved in 1500 mL of deionized water, and then the mixture was stirred for 6 hrs to fully react. The reacted solution was then warmed up to 120°C and maintained at that temperature for 6 hrs to obtain a suspension containing $LiFePO_4$.

15.7g of the obtained lithium iron pyrophosphate powder was added to the above suspension of lithium iron phosphate ($LiFePO_4$) and sucrose, and the sintering temperature in the coating and sintering step during the preparation process was 600°C and the sintering time was 4 hrs to control the crystallinity of $LiFePO_4$ to be 8%, other conditions of the Comparative Example 7 were the same as those in Comparative Example 4, and amorphous lithium iron pyrophosphate, amorphous lithium iron phosphate, the carbon coated positive electrode active materials were obtained.

**Comparative Examples 8-11**

Other conditions were the same as those in Comparative Example 7, except that the drying temperatures/drying times in the drying step during the preparation of lithium iron pyrophosphate ($Li_2FeP_2O_7$) were 80°C/3 hrs, 80°C/3 hrs, and 80°C/3 hrs, respectively, in Comparative Examples 8-10; the sintering temperatures and sintering times in the sintering step during the preparation of lithium iron pyrophosphate ($Li_2FeP_2O_7$) were 400°C/3 hrs, 400°C/3 hrs, and 350°C/2 hrs, respectively, in Comparative Examples 8-10, and the drying temperature/drying time in the drying step during the preparation of lithium iron pyrophosphate ($Li_2FeP_2O_7$) was 80°C/3 hrs in Comparative Example 11; and the amounts of $Li_2FeP_2O_7/LiFePO_4$ in Comparative Examples 8-11 were 47.2 g/15.7 g, 15.7 g/47.2 g, 62.8 g/0 g, 0 g/62.8 g, respectively.

The [preparation of positive electrode plate], [preparation of negative electrode plate], [preparation of electrolyte], [separator] and [preparation of battery] of the above Examples and Comparative Examples were the same as the processes in Example 1-1.

**[Related parameter tests]**

**1. Initial gram capacity test for button cells:**

At 2.5-4.3 V, the above-mentioned button cells were charged to 4.3 V at 0.1 C, then charged at constant voltage at 4.3 V until the current was less than or equal to 0.05 mA, left for 5 minutes, and then discharged to 2.0 V at 0.1 C, at which time the discharge capacity was the initial gram capacity, recorded as D0.

**2. Average discharge voltage (V) test for button cells:**

The above-prepared button cells were left for 5 minutes at a constant temperature of 25°C, discharged to 2.5 V at 0.1 C, left for 5 minutes, charged to 4.3 V at 0.1 C, then charged at constant voltage at 4.3 V until the current was less than or equal to 0.05 mA, left for 5 minutes; and then were discharged to 2.5 V at 0.1C, at which time the discharge capacity was the initial gram capacity, recorded as D0, and the discharge energy was the initial energy, recorded as E0, and the average discharge voltage V of the button cells was E0/D0.

**3. Expansion test for full batteries at 60°C:**

The full batteries were stored under the 100% state of charge (SOC) at 60°C. The open circuit voltage (OCV) and AC internal impedance (IMP) of the batteries were measured before, during and after storage to monitor the SOC, and the volume of the batteries was measured. In which the full batteries were removed after every 48 hrs of storage, the open circuit voltage (OCV) and internal impedance (IMP) were tested after standing for 1 hr, and the battery volume was measured by the water displacement method after cooling to room temperature. The water displacement method that is, first the gravity $F_1$ of a battery was measured using a balance that automatically performs unit conversion on the dial data, then the battery was completely immersed in deionized water (density was known to be 1 g/cm$^3$), the gravity $F_2$ of the battery at this point was measured, the buoyancy $F_{buoyancy}$ of the battery was thus $F_1$- $F_2$, and then according to Archimedes' principle $F_{buoyancy} = \rho \times g \times V_{displaced}$, the battery volume $V = (F_1 - F_2) / (\rho \times g)$.

From the OCV and IMP test results, the batteries in the examples always maintained more than 99% SOC during this experiment until the end of storage.

After 30 days of storage, the volume of the batteries was measured and the percentage increase in volume of the batteries after storage was calculated relative to the volume of the batteries before storage.

In addition, the residual capacity of the batteries was measured. At 2.5-4.3 V, the full batteries were charged to 4.3 V at 1 C, then charged at the constant voltage at 4.3 V until the current was less than or equal to 0.05 mA and were left for 5 minutes, and the charging capacity at this point was recorded as the residual capacity of the batteries.

**4. Cycle performance test for full batteries at 45°C:**

The full batteries were charged to 4.3 V at 1 C under a constant temperature of 45°C, under 2.5-4.3 V, and then charged at constant voltage at 4.3 V until the current was less than or equal to 0.05 mA and left for 5 minutes, then discharged to 2.5 V at 1 C, the discharge capacity recorded as D0. The charge/discharge cycle was repeated until the discharge capacity was reduced to 80% of D0. The number of cycles the batteries had undergone at this point was recorded (referred to as "45°C cycle number").

### 5. Test for lattice change rate

The samples of the prepared positive electrode active material were placed in XRD (model type: Bruker D8 Discover) at a constant temperature of 25°C and were tested at 1°/minute, and the test data were compiled and analyzed, and the lattice constants a0, b0, c0 and v0 were calculated at this time with reference to standard PDF cards (a0, b0 and c0 indicate the length on each aspect of the unit cell, and v0 indicates the unit cell volume, which can be directly obtained by XRD refinement results).

Using the method of preparing button battery in the above-mentioned examples, the samples of positive electrode active material were prepared into button batteries, and the button batteries were charged at a small rate of 0.05 C until the current was reduced to 0.01 C. Then the positive electrode plates in the button batteries were removed and soaked in dimethyl carbonate (DMC) for 8 hrs, and were dried and scraped to obtain powder, and particles with particle size less than 500 nm were screened out. Samples were taken and their lattice constants v1 were calculated in the same manner as the fresh samples tested above, and (v0-v1)/v0×100% as their lattice change rates before and after complete lithium deintercalation and intercalation were shown in the table.

### 6. Test for Li/Mn antisite-defects concentration

The XRD results from the "Measurement of lattice change rate" were compared with the PDF (Powder Diffraction File) card of the standard crystal to obtain the Li/Mn anti site-defects concentration. Specifically, the XRD results from the "Measurement of lattice change rate" were imported into the General Structural Analysis System (GSAS) software, and the refinement results, which contain the occupancy of different atoms, were automatically obtained, and the Li/Mn antisite-defects concentrations were obtained by reading the refinement results.

### 7. Transition metal exsolution test:

The full batteries cycled at 45°C until the capacity decayed to 80% were discharged to a cut-off voltage of 2.0 V at a rate of 0.1 C. The batteries were then disassembled, the negative electrode plates were removed, and 30 discs per unit area (1540.25 $mm^2$) were randomly taken from the negative electrode plate and tested by inductively coupled plasma emission spectroscopy (ICP) using an Agilent ICP-OES730. The amount of Fe (if the Mn site of the positive electrode active material was doped with Fe) and Mn were calculated from the ICP results, and thus the exsolution amount of Mn (and Mn site-doping Fe) after the cycles were calculated. The test standard was based on EPA-6010D-2014.

### 8. Test for surface oxygen valence

5 g of the prepared positive electrode active material sample was taken and prepared into a button cell according to the preparation method for the button cell described in the above examples. The button cell was charged at a small rate of 0.05 C until the current was reduced to 0.01 C. Then the positive electrode plate was removed from the button cell and soaked in dimethyl carbonate (DMC) for 8 hrs, and was dried, scraped to obtain powder, and the particles with particle size less than 500 nm were screened out. The resulting particles were measured by electron energy loss spectroscopy (EELS, the model type of instrument used was Talos F200S) to obtain the energy loss near edge structure (ELNES), which reflected the density of states and energy level distribution of the elements. Based on the density of states and energy level distribution, the number of occupied electrons was calculated by integrating the valence band density of states data to derive the valence state of the surface oxygen after charging.

### 9. Measurement of compaction density

5 g of the prepared positive electrode active material powder was placed in a special mold for compaction (CARVER mold, model type of 13mm, USA), then the mold was placed on a compaction density apparatus. A pressure of 3 T was applied, the thickness of the powder under pressure was read on the apparatus (the thickness after unloading, the area of the container used for testing is 1540.25 $mm^2$), and the compaction density was calculated by $\rho = m/v$.

### 10. Test for crystallinity of pyrophosphate and phosphate using X-ray diffraction

5 g of the prepared positive electrode active material powder was taken, the total scattering intensity was measured, the total scattering intensity is the sum of the scattering intensity of the whole space substance, is only related to the intensity of the primary rays, the chemical structure, the total number of electrons participating in the diffraction, i.e., mass, but not to the order state of the sample; then the crystalline scattering and non-crystalline scattering were separated from the diffractogram, and the crystallinity was obtained from the ratio of the scattering of the crystalline part

to the total intensity of the scattering.

**11. Crystalline spacing and clamping angle**

1 g of each positive electrode active material powder prepared above was taken in a 50 mL test tube and 10 mL of alcohol with 75% mass fraction was injected in the test tube, then stirred and fully dispersed for 30 minutes, then an appropriate amount of the above solution was taken with a clean disposable plastic pipette and added dropwise on a 300-mesh copper net, at this time, part of the powder remained on the copper net, the copper net with the sample was transferred to the TEM (Talos F200s G2) sample chamber for testing, and the original TEM test image was obtained, and saved as the original image format (xx.dm3).

The original image from the above TEM test was opened in DigitalMicrograph software and Fourier transform was performed (done automatically by the software after clicking on the operation) to get the diffraction pattern, the distance from the diffraction spot to the center of the diffraction pattern was measured to obtain the crystal plane spacing, and the angle was calculated according to the Bragg equation.

Table 1 Performance test results for Examples 1-1 to 1-33 and Comparative Examples 1 to 7.

| Example No. | Core | First coating layer | Second coating layer | Lattice change rate (%) | Li/Mn-antisite defect concentration /% | Fe and Mn exsolution amount after cycling (ppm) | Surface oxygen valency | 0.1C button cell capacity (mAh/g) | Average button cell discharge voltage (V) | 60°C Battery expansion after 30 d storage(%) | 45 °C cycle number |
|---|---|---|---|---|---|---|---|---|---|---|---|
| Example 1-1 | $Li_{0.999}Mn_{0.60}Fe_{0.393}V_{0.004}CO_{0.003}P_{0.999}S_{0.001}O_4$ | 1% $Li_2FeP_2O_7$/ 3% $LiFePO_4$ | 2% Carbon | 2.4 | 0.4 | 8 | -1.98 | 158.2 | 3.78 | 1.9 | 1328 |
| Example 1-2 | $Li_{0.999}Mn_{0.60}Fe_{0.40}P_{0.999}S_{0.001}O_4$ | 0.8% $Li_2FeP_2O_7$/ 2.4% $LiFePO_4$ | 1% Carbon | 6.6 | 1.2 | 63 | -1.97 | 148.9 | 3.75 | 6.4 | 804 |
| Example 1-3 | $Li_{0.999}Mn_{0.60}Fe_{0.40}P_{0.999}S_{0.001}O_4$ | 1% $Li_2FeP_2O_7$/ 3% $LiFePO_4$ | 1% Carbon | 6.5 | 1.1 | 48 | -1.97 | 148.5 | 3.74 | 5.3 | 918 |
| Example 1-4 | $Li_{0.999}Mn_{0.60}Fe_{0.40}P_{0.999}S_{0.001}O_4$ | 1.2% $Li_2FeP_2O_7$/ 3.6% $LiFePO_4$ | 1% Carbon | 6.5 | 0.8 | 32 | -1.97 | 147.3 | 3.73 | 4.8 | 968 |
| Example 1-5 | $Li_{0.999}Mn_{0.60}Fe_{0.40}P_{0.999}S_{0.001}O_4$ | 1.4% $Li_2FeP_2O_7$/ 4.2% $LiFePO_4$ | 1% Carbon | 6.5 | 0.7 | 20 | -1.98 | 146.8 | 3.73 | 3.6 | 1064 |
| Example 1-6 | $Li_{0.999}Mn_{0.60}Fe_{0.40}P_{0.999}S_{0.001}O_4$ | 1.6% $Li_2FeP_2O_7$/ 4.8% $LiFePO_4$ | 1% Carbon | 6.6 | 0.6 | 15 | -1.98 | 145.9 | 3.72 | 2.8 | 1189 |
| Example 1-7 | $Li_{0.999}Mn_{0.60}Fe_{0.40}P_{0.999}S_{0.001}O_4$ | 1% $Li_2FeP_2O_7$/ 3% $LiFePO_4$ | 2% Carbon | 6.5 | 1.0 | 42 | -1.97 | 147.5 | 3.73 | 4.8 | 968 |
| Example 1-8 | $Li_{0.999}Mn_{0.60}Fe_{0.40}P_{0.999}S_{0.001}O_4$ | 1% $Li_2FeP_2O_7$/ 3% $LiFePO_4$ | 4% Carbon | 6.5 | 1.0 | 38 | -1.97 | 146.4 | 3.73 | 4.3 | 1012 |
| Example 1-9 | $Li_{0.999}Mn_{0.60}Fe_{0.40}P_{0.999}S_{0.001}O_4$ | 1% $Li_2FeP_2O_7$/ 3% $LiFePO_4$ | 5% Carbon | 6.4 | 1.1 | 29 | -1.98 | 144.3 | 3.73 | 3.7 | 1108 |
| Example 1-10 | $Li_{0.999}Mn_{0.60}Fe_{0.40}P_{0.999}S_{0.001}O_4$ | 1% $Li_2FeP_2O_7$/ 3% $LiFePO_4$ | 6% Carbon | 6.4 | 1.1 | 18 | -1.98 | 142.1 | 3.73 | 2.8 | 1219 |
| Example 1-11 | $Li_{0.999}Mn_{0.60}Fe_{0.40}P_{0.999}S_{0.001}O_4$ | 1.5% $Li_2FeP_2O_7$/ 2.5% $LiFePO_4$ | 2% Carbon | 6.5 | 1.1 | 34 | -1.97 | 147.8 | 3.74 | 5.2 | 927 |
| Example 1-12 | $Li_{0.999}Mn_{0.60}Fe_{0.40}P_{0.999}S_{0.001}O_4$ | 2% $Li_2FeP_2O_7$/ 2% $LiFePO_4$ | 2% Carbon | 6.6 | 1.0 | 22 | -1.96 | 147.6 | 3.74 | 6.1 | 897 |
| Example 1-13 | $Li_{0.999}Mn_{0.60}Fe_{0.40}P_{0.999}S_{0.001}O_4$ | 2.5% $Li_2FeP_2O_7$/ 1.5% $LiFePO_4$ | 2% Carbon | 6.7 | 1.2 | 18 | -1.96 | 147.2 | 3.74 | 6.9 | 816 |

(continued)

| Example No. | Core | First coating layer | Second coating layer | Lattice change rate (%) | Li/Mn-antisite defect concentration /% | Fe and Mn exsolution amount after cycling (ppm) | Surface oxygen valency | 0.1C button cell capacity (mAh/g) | Average button cell discharge voltage (V) | 60°C Battery expansion after 30 d storage(%) | 45 °C cycle number |
|---|---|---|---|---|---|---|---|---|---|---|---|
| Example 1-14 | $Li_{0.999}Mn_{0.60}Fe_{0.40}P_{0.999}S_{0.001}O_4$ | 3% $Li_2FeP_2O_7$/ 1% $LiFePO_4$ | 2% Carbon | 6.7 | 1.1 | 9 | -1.97 | 147.0 | 3.75 | 7.5 | 764 |
| Example 1-15 | $Li_{0.999}Mn_{0.60}Zn_{0.40}P_{0.999}S_{0.001}O_4$ | 3% $Li_2FeP_2O_7$/ 1% $LiFePO_4$ | 2% Carbon | 7.5 | 2.5 | 18 | -1.97 | 138.7 | 3.86 | 8.4 | 857 |
| Example 1-16 | $Li_{0.999}Mn_{0.60}Fe_{0.40}P_{0.999}S_{0.001}O_4$ | 1% $Li_2FeP_2O_7$/ 3% $LiFePO_4$ | 2% Carbon | 5.4 | 0.8 | 14 | -1.97 | 139.4 | 3.86 | 4.5 | 974 |
| Example 1-17 | $Li_{0.999}Mn_{0.60}Fe_{0.40}P_{0.999}S_{0.001}O_4$ | 1% $Li_2FeP_2O_7$/ 3% $LiFePO_4$ | 2% Carbon | 4.2 | 0.6 | 13 | -1.97 | 153.2 | 3.78 | 3.2 | 1241 |
| Example 1-18 | $Li_{0.999}Mn_{0.60}Fe_{0.40}P_{0.999}S_{0.001}O_4$ | 1% $Li_2FeP_2O_7$/ 3% $LiFePO_4$ | 2% Carbon | 2.6 | 0.5 | 10 | -1.97 | 155.6 | 3.80 | 2.7 | 1245 |
| Example 1-19 | $Li_{0.999}Mn_{0.60}Fe_{0.40}P_{0.999}S_{0.001}O_4$ | 1% $Li_2FeP_2O_7$/ 3% $LiFePO_4$ | 2% Carbon | 2.3 | 0.5 | 9 | -1.98 | 157.6 | 3.80 | 2.1 | 1349 |
| Example 1-20 | $Li_{1.001}Mn_{0.60}Fe_{0.393}V_{0.004}Mg_{0.003}P_{0.999}Si_{0.001}O_4$ | 1% $Li_2FeP_2O_7$/ 3% $LiFePO_4$ | 2% Carbon | 2.4 | 0.7 | 11 | -1.98 | 157.4 | 3.80 | 2.4 | 1368 |
| Example 1-21 | $Li_{1.001}Mn_{0.55}Fe_{0.40}V_{0.025}Mg_{0.025}P_{0.999}Si_{0.001}O_4$ | 1% $Li_2FeP_2O_7$/ 3% $LiFePO_4$ | 2% Carbon | 2.2 | 0.5 | 8 | -1.98 | 158.4 | 3.72 | 2.0 | 1459 |
| Example 1-22 | $Li_{1.001}Mn_{0.65}Fe_{0.25}V_{0.05}Mg_{0.05}P_{0.999}Si_{0.001}O_4$ | 1% $Li_2FeP_2O_7$/ 3% $LiFePO_4$ | 2% Carbon | 2.5 | 0.8 | 12 | -1.98 | 156.9 | 3.83 | 2.8 | 1283 |
| Example 1-23 | $Li_{1.004}Mn_{0.7}Fe_{0.2}V_{0.05}Mg_{0.05.}P_{0.998}B_{0.002}O_4$ | 1% $Li_2FeP_2O_7$/ 3% $LiFePO_4$ | 2% Carbon | 2.6 | 0.8 | 11 | -1.98 | 157.1 | 3.83 | 2.5 | 1268 |
| Example 1-24 | $Li_{1.006}Mn_{0.75}Fe_{0.15}V_{0.05}Mg_{0.05}P_{0.997}B_{0.003}O_4$ | 1% $Li_2FeP_2O_7$/ 3% $LiFePO_4$ | 2% Carbon | 2.6 | 0.8 | 10 | -1.98 | 157.4 | 3.83 | 2.6 | 1329 |
| Example 1-25 | $Li_{1.002}Mn_{0.60}Fe_{0.393}V_{0.004}Mg_{0.003}P_{0.998}Si_{0.002}O_4$ | 1% $Li_2FeP_2O_7$/ 3% $LiFePO_4$ | 2% Carbon | 2.3 | 0.7 | 10 | -1.98 | 157.3 | 3.78 | 2.4 | 1369 |

(continued)

| Example No. | Core | First coating layer | Second coating layer | Lattice change rate (%) | Li/Mn-antisite defect concentration /% | Fe and Mn exsolution amount after cycling (ppm) | Surface oxygen valency | 0.1C button cell capacity (mAh/g) | Average button cell discharge voltage (V) | 60°C Battery expansion after 30 d storage(%) | 45 °C cycle number |
|---|---|---|---|---|---|---|---|---|---|---|---|
| Example 1-26 | $Li_{0.997}Mn_{0.80}Fe_{0.194}V_{0.003}Mg_{0.003}P_{0.997}S_{0.003}O_4$ | 1% $Li_2FeP_2O_7$/ 3% $LiFePO_4$ | 2% Carbon | 2.8 | 0.9 | 12 | -1.98 | 156.1 | 3.85 | 2.9 | 1128 |
| Example 1-27 | $Li_{0.996}Mn_{0.60}Fe_{0.393}V_{0.004}Mg_{0.003}P_{0.996}S_{0.004}O_4$ | 1% $Li_2FeP_2O_7$/ 3% $LiFePO_4$ | 2% Carbon | 2.2 | 0.6 | 11 | -1.98 | 157.5 | 3.78 | 2.4 | 1394 |
| Example 1-28 | $Li_{0.995}Mn_{0.9}Fe_{0.094}V_{0.003}Mg_{0.003}P_{0.995}S_{0.005}O_4$ | 1% $Li_2FeP_2O_7$/ 3% $LiFePO_4$ | 2% Carbon | 3.2 | 1.1 | 13 | -1.96 | 156.8 | 3.89 | 3.2 | 1089 |
| Example 1-29 | $Li_{0.994}Mn_{0.90}Fe_{0.094}V_{0.003}Mg_{0.003}P_{0.994}S_{0.006}O_4$ | 1% $Li_2FeP_2O_7$/ 3% $LiFePO_4$ | 2% Carbon | 3.0 | 1.2 | 14 | -1.95 | 156.1 | 3.89 | 3.2 | 1038 |
| Example 1-30 | $Li_{0.999}Mn_{0.60}Fe_{0.40}P_{0.999}S_{0.001}O_4$ | 1% $Li_2FeP_2O_7$/ 3% $LiFePO_4$ | 2% Carbon | 2.8 | 1.4 | 16 | -1.95 | 155.8 | 3.89 | 3.1 | 948 |
| Example 1-31 | $Li_{0.999}Mn_{0.60}Fe_{0.40}P_{0.999}S_{0.001}O_4$ | 1% $Li_2FeP_2O_7$/ 3% $LiFePO_4$ | 2% Carbon | 2.6 | 1.4 | 17 | -1.94 | 155.4 | 3.89 | 3.0 | 917 |
| Example 1-32 | $Li_{0.999}Mn_{0.60}Fe_{0.40}P_{0.999}S_{0.001}O_4$ | 1% $Li_2FeP_2O_7$/ 3% $LiFePO_4$ | 2% Carbon | 2.4 | 1.2 | 18 | -1.94 | 154.8 | 3.89 | 2.8 | 897 |
| Example 1-33 | $Li_{0.9}Mn_{0.90}Fe_{0.094}V_{0.003}Mg_{0.003}P_{0.9}S_{0.1}O_4$ | 1% $Li_2FeP_2O_7$/ 3% $LiFePO_4$ | 2% Carbon | 2.1 | 0.9 | 20 | -1.94 | 154.5 | 3.89 | 2.7 | 879 |
| Comparative Example 1 | $LiMnPO_4$ | - | 1% Carbon | 11.4 | 3.2 | 2060 | -1.55 | 125.6 | 4.02 | 48.6 | 185 |
| Comparative Example 2 | $LiMn_{0.60}Fe_{0.40}PO_4$ | - | 1% Carbon | 8.7 | 2.8 | 1597 | -1.76 | 134.8 | 3.76 | 42.5 | 358 |
| Comparative Example 3 | $Li_{0.999}MnP_{0.999}S_{0.001}O_4$ | - | 1% Carbon | 9.8 | 2.5 | 1895 | -1.66 | 128.6 | 4.05 | 45.5 | 267 |

(continued)

| Example No. | Core | First coating layer | Second coating layer | Lattice change rate (%) | Li/Mn-antisite defect concentration /% | Fe and Mn exsolution amount after cycling (ppm) | Surface oxygen valency | 0.1C button cell capacity (mAh/g) | Average button cell discharge voltage (V) | 60°C Battery expansion after 30 d storage(%) | 45 °C cycle number |
|---|---|---|---|---|---|---|---|---|---|---|---|
| Comparative Example 4 | $Li_{0.999}Mn_{0.60}Fe_{0.40}P_{0.999}S_{0.001}O_4$ | - | 1% Carbon | 6.7 | 1.8 | 1279 | -1.83 | 140.5 | 3.78 | 38.5 | 417 |
| Comparative Example 5 | $Li_{0.999}Mn_{0.60}Fe_{0.40}P_{0.999}S_{0.001}O_4$ | 4% amorphous $Li_2FeP_2O_7$ | 1% Carbon | 6.5 | 1.8 | 208 | -1.90 | 140.3 | 3.73 | 12.5 | 519 |
| Comparative Example 6 | $Li_{0.999}Mn_{0.60}Fe_{0.40}P_{0.999}S_{0.001}O_4$ | 4% amorphous $LiFePO_4$ | 1% Carbon | 6.6 | 1.8 | 318 | -1.91 | 140.2 | 3.74 | 11.5 | 528 |
| Comparative Example 7 | $Li_{0.999}Mn_{0.60}Fe_{0.40}P_{0.999}S_{0.001}O_4$ | 1% amorphous $Li_2FeP_2O_7$+3% amorphous $LiFePO_4$ | 1% Carbon | 6.6 | 1.8 | 174 | -1.90 | 140.1 | 3.75 | 8.6 | 682 |
| | Note: 1) The crystallinity of $Li_2FeP_2O_7$ and $LiFePO_4$ in Examples 1-1 to 1-33 were 100%; 2) The crystallinity of $Li_2FeP_2O_7$ was 5% and the crystallinity of $LiFePO_4$ was 8% in Comparative Example 5-7. | | | | | | | | | | |

With reference to Examples 1-1 to 1-33 and Comparative Examples 1 to 4, it is clear that the presence of the first coating layer facilitates the reduction of the Li/Mn anti site-defect concentration and the amount of Fe and Mn exsolved after cycling of the resulting material, increases the gram capacity of the button batteries, and improves the safety performance and cycling performance of the batteries. When other elements were doped in the Mn and phosphorus sites, respectively, the lattice change rate, anti site-defect concentration and Fe and Mn exsolution of the resulting material were significantly reduced, which increased the gram capacity of the batteries and improved the safety performance and cycling performance of the batteries.

With reference to Examples 1-1 to 1-6, it can be found that as the amount of the first coating layer increases from 3.2% to 6.4%, the concentration of Li/Mn antisite defects in the resulting material gradually decreases, the amount of Fe and Mn exsolved after cycling gradually decreases, and the safety performance and cycling performance at 45°C of the corresponding batteries is improved, but the button cell capacity slightly decreases. Optionally, the best overall performance of the corresponding battery is achieved when the total amount of the first coating layer is 4-5.6 wt%.

With reference to Examples 1-3 and Examples 1-7 to 1-10, it can be seen that as the amount of the second coating layer increases from 1% to 6%, the concentration of Li/Mn anti-site defects in the resulting material gradually decreases, the amount of Fe and Mn exsolved after cycling gradually decreases, and the safety performance and cycling performance at 45°C of the corresponding battery is improved, but the button cell capacity decreases slightly. Optionally, the best overall performance of the corresponding battery is achieved when the total amount of the second coating layer is 3-5 wt%.

With reference to Examples 1-11 to 1-15 and Comparative Examples 5 to 6, it can be seen that the improvement in battery performance is more pronounced when both $Li_2FeP_2O_7$ and $LiFePO_4$ were present in the first coating layer, and in particular when $Li_2FeP_2O_7$ and $LiFePO_4$ were present in a weight ratio of 1:3 to 3:1, and in particular 1:3 to 1:1.

Table 2 Performance test results for Examples 2-1 to 2-4.

| Example No. | Core | Pyrophosph ate and phosphate crystallinity 1 | Lattice change rate (%) | Li/Mn-antisite defect concentrat ion /% | Fe and Mn exsolution amount after cycling (ppm) | Surface oxygen valency | 0.1C button cell capacity (mAh/g) | Average button cell discharge voltage (V) | 60°C Battery expansio n after 30 d storage( %) | 45°C cycle number |
|---|---|---|---|---|---|---|---|---|---|---|
| Example 2-1 | 1% $Li_2FeP_2O_7$/ 3% $LiFePO_4$ | 30% | 6.3 | 1.9 | 147 | -1.88 | 145.2 | 3.72 | 5.6 | 698 |
| Example 2-2 | 1% $Li_2FeP_2O_7$/ 3% $LiFePO_4$ | 50% | 4.7 | 1.2 | 97 | -1.89 | 149.2 | 3.74 | 4.7 | 869 |
| Example 2-3 | 1% $Li_2FeP_2O_7$/ 3% $LiFePO_4$ | 70% | 3.5 | 0.8 | 29 | -1.91 | 151.3 | 3.75 | 3.8 | 1027 |
| Example 2-4 | 1% $Li_2FeP_2O_7$/ 3% $LiFePO_4$ | 100% | 2.4 | 0.4 | 8 | -1.98 | 158.2 | 3.79 | 1.9 | 1328 |
| | 1: The crystallinity of $Li_2FeP_2O_7$ and $LiFePO_4$ is 30%, 50%, 70%, and 100%, respectively. | | | | | | | | | |

As can be seen from Table 2, as the crystallinity of pyrophosphate and phosphate in the first coating layer gradually increases, the lattice change rate, Li/Mn-antisite defect concentration and Fe and Mn exsolution of the corresponding materials gradually decrease, and the button cell capacity of the batteries gradually increases, and the safety performance and cycling performance gradually improve.

Table 3 Performance test results of Examples 3-1 to 3-12.

| Example No. | Dopant element type and doping amount | Reactor Temperature/ °C | Mixing time/ min | Lattice change rate (%) | Li/Mn-antisite defect concentration /% | Fe and Mn exsolution amount after cycling (ppm) | Surface oxygen valency | 0.1C button cell capacity (mAh/g) | Average button cell discharge voltage (V) | 60°C Battery expansion after 30 d storage (%) | 45°C cycle number |
|---|---|---|---|---|---|---|---|---|---|---|---|
| Example 3-1 | $Li_{0.999}Mn_{0.60}Fe_{0.393}V_{0.004}Co_{0.003}P_{0.999}S_{0.001}O_4$ | 60 | 120 | 5.6 | 2.4 | 49 | -1.98 | 155.2 | 3.67 | 5.6 | 1102 |
| Example 3-2 | $Li_{0.999}Mn_{0.60}Fe_{0.393}V_{0.004}Co_{0.003}P_{0.999}S_{0.001}O_4$ | 70 | 120 | 4.8 | 1.9 | 37 | -1.98 | 155.7 | 3.69 | 4.7 | 1203 |
| Example 3-3 | $Li_{0.999}Mn_{0.60}Fe_{0.393}V_{0.004}Co_{0.003}P_{0.999}S_{0.001}O_4$ | 80 | 120 | 3.7 | 1.3 | 28 | -1.98 | 156.4 | 3.72 | 3.8 | 1275 |
| Example 3-4 | $Li_{0.999}Mn_{0.60}Fe_{0.393}V_{0.004}Co_{0.003}P_{0.999}S_{0.001}O_4$ | 90 | 120 | 2.9 | 1.1 | 17 | -1.98 | 157.8 | 3.75 | 3.1 | 1305 |
| Example 3-5 | $Li_{0.999}Mn_{0.60}Fe_{0.393}V_{0.004}Co_{0.003}P_{0.999}S_{0.001}O_4$ | 100 | 120 | 2.5 | 0.5 | 9 | -1.98 | 158.5 | 3.78 | 2.4 | 1327 |
| Example 3-6 | $Li_{0.999}Mn_{0.60}Fe_{0.393}V_{0.004}Co_{0.003}P_{0.999}S_{0.001}O_4$ | 110 | 120 | 2.8 | 1.2 | 19 | -1.98 | 156.7 | 3.73 | 3.6 | 1257 |
| Example 3-7 | $Li_{0.999}Mn_{0.60}Fe_{0.393}V_{0.004}Co_{0.003}P_{0.999}S_{0.001}O_4$ | 120 | 120 | 3.7 | 2.1 | 38 | -1.98 | 154.8 | 3.69 | 4.8 | 1179 |
| Example 3-8 | $Li_{0.999}Mn_{0.60}Fe_{0.393}V_{0.004}Co_{0.003}P_{0.999}S_{0.001}O_4$ | 130 | 120 | 4.5 | 3.4 | 46 | -1.98 | 153.7 | 3.64 | 6.3 | 986 |
| Example 3-9 | $Li_{0.999}Mn_{0.60}Fe_{0.393}V_{0.004}Co_{0.003}P_{0.999}S_{0.001}O_4$ | 100 | 60 | 4.9 | 3.1 | 38 | -1.98 | 155.4 | 3.76 | 4.9 | 1021 |
| Example 3-10 | $Li_{0.999}Mn_{0.60}Fe_{0.393}V_{0.004}Co_{0.003}P_{0.999}S_{0.001}O_4$ | 100 | 90 | 4.1 | 2.5 | 27 | -1.98 | 156.3 | 3.77 | 4.2 | 1097 |
| Example 3-11 | $Li_{0.999}Mn_{0.60}Fe_{0.393}V_{0.004}Co_{0.003}P_{0.999}S_{0.001}O_4$ | 100 | 150 | 3.5 | 1.1 | 15 | -1.98 | 157.8 | 3.79 | 3.1 | 1184 |
| Example 3-12 | $Li_{0.999}Mn_{0.60}Fe_{0.393}V_{0.004}Co_{0.003}P_{0.999}S_{0.001}O_4$ | 100 | 180 | 2.5 | 0.5 | 11 | -1.98 | 158.1 | 3.79 | 2.4 | 1297 |
| Note | 1. The temperature and stirring time in the reactor were the parameters during the preparation of A-element-doped manganese oxalate (i.e., step (1)) | | | | | | | | | | |

As can be seen from Table 3, by adjusting the reaction temperature and reaction time in the reactor during the preparation of manganese oxalate particles, the various properties of the positive electrode material described in this application can be further improved. For example, in the process of gradually increasing the reaction temperature from 60°C to 130°C, the lattice change rate and Li/Mn-antisite defect concentration first decreased and then increased, and the corresponding post-cycle metal exsolution amount and safety performance also demonstrated a similar pattern, while the button cell capacity and cycle performance first increased and then decreased as the temperature increased. By controlling the reaction temperature constant and adjusting the reaction time, a similar pattern can also be observed.

Table 4 Performance test results for Examples 4-1 to 4-7 and Comparative Examples 8 to 11.

| Example No. | $Li_2FeP_2O_7$: $LiFePO_4$ (weight ratio) | Drying temperature (°C) | Drying time (h) | Sintering temperature (°C) | Sintering time (h) | Lattice spacing of the first coating layer of pyrophosphate (nm) | Angle of pyrophosphate in the first coating layer (°) | Phosphate lattice spacing in the first coating layer (nm) | Angle of phosphate in the first coating layer (°) | Lattice change rate (%) | Li/Mn-antisite defect concentration /% | Fe and Mn exsolution amount after cycling (ppm) | Surface oxygen valency | 0.1C button cell capacity (mAh/g) | Average button cell discharge voltage (V) | 60°C Battery expansion after 30 d storage (%) |
|---|---|---|---|---|---|---|---|---|---|---|---|---|---|---|---|---|
| Example 4-1 | 1: 3 | 100 | 4 | 700 | 6 | 0.303 | 29.496 | 0.348 | 25.562 | 2.9 | 0.6 | -1.97 | 155.4 | 3.71 | 3.4 | 1183 |
| Example 4-2 | 1: 3 | 150 | 6 | 700 | 6 | 0.303 | 29.496 | 0.348 | 25.562 | 2.6 | 0.6 | -1.98 | 157.8 | 3.78 | 2.4 | 1347 |
| Example 4-3 | 1: 3 | 200 | 6 | 700 | 6 | 0.303 | 29.496 | 0.348 | 25.562 | 2.7 | 0.6 | -1.98 | 156.5 | 3.73 | 3.1 | 1277 |
| Example 4-4 | 1: 3 | 200 | 6 | 600 | 6 | 0.303 | 29.496 | 0.348 | 25.562 | 2.9 | 1.1 | -1.95 | 153.8 | 3.69 | 3.9 | 984 |
| Example 4-5 | 1: 1 | 150 | 6 | 600 | 4 | 0.303 | 29.496 | 0.348 | 25.562 | 2.8 | 1.2 | -1.94 | 155.5 | 3.71 | 3.5 | 895 |
| Example 4-6 | 1: 1 | 150 | 6 | 600 | 6 | 0.303 | 29.496 | 0.348 | 25.562 | 2.6 | 0.8 | -1.95 | 156.3 | 3.72 | 3.1 | 963 |
| Example 4-7 | 1: 1 | 150 | 6 | 800 | 8 | 0.303 | 29.496 | 0.348 | 25.562 | 2.5 | 0.4 | -1.97 | 156.9 | 3.74 | 2.7 | 1043 |
| Comparative Example 8 | 1: 3 | 80 | 3 | 400 | 3 | - | - | - | - | 3.9 | 1.8 | -1.91 | 148.0 | 3.67 | 9.4 | 779 |
| Comparative Example 9 | 1: 1 | 80 | 3 | 400 | 3 | - | - | - | - | 3.6 | 1.6 | -1.93 | 149.4 | 3.70 | 6.8 | 683 |
| Comparative Example 10 | $Li_2FeP_2O_7$ only | 80 | 3 | 350 | 2 | - | - | - | - | 3.7 | 1.7 | -1.86 | 147.5 | 3.68 | 11.5 | 385 |
| Comparative Example 11 | $LiFePO_4$ only | 80 | 3 | - | - | - | - | - | - | 3.4 | 1.4 | -1.93 | 150.3 | 3.72 | 4.7 | 526 |

As can be seen from Table 4, when preparing lithium iron pyrophosphate by the method of the present application, the properties of the resulting material can be improved by adjusting the drying temperature/time and the sintering temperature/time during the preparation process, thereby improving the battery performance. As can be seen from the Comparative Examples 8-11, when the drying temperature during the preparation of lithium iron pyrophosphate was lower than 100°C or the temperature of the sintering step was lower than 400°C, $Li_2FeP_2O_7$ cannot be obtained, which is desired to be made by the present application, and thus the performance of the material and the performance of the battery including the resulting material cannot be improved.

Positive electrode slurries, positive electrode plates and full cells were prepared using the positive electrode active materials prepared in respective above-mentioned Examples and Comparative Examples, and the performance tests of the slurry and cell were performed.

In the following Examples and Comparative Examples, the preparation of the electrode plates and cells, and the performance tests for the slurries and the cells were carried out according to the following methods:

1) Preparation of positive electrode plate

The positive electrode active material was mixed with a conductive agent of acetylene black, a binder of polyvinylidene fluoride (PVDF), an infiltrant and a dispersant in a N-methyl pyrrolidone solvent system, and then coated on an aluminum foil with an under-coating and dried and cold pressed to obtain a positive electrode plate. The weight ratio between the positive electrode active material, the conductive agent of acetylene black, the binder of polyvinylidene fluoride (PVDF), the dispersant and the infiltrant was $(92-Y_1-Y_2)$:2.5: 5.5:$Y_1$:$Y_2$. The coating amount was 0.02 g/cm$^2$, and the compaction density was 2.4 g/cm$^3$.

The aluminum foil with a conductive under-coating was prepared according to the following method:
preparation of a conductive under-coating slurry: polyacrylic acid-acrylate copolymers (weight average molar mass of 340,000) and a conductive agent (Super P) were formulated at a weight ratio of 40:60 and were dissolved/dispersed in deionized water, and were prepared into a conductive under-coating slurry.

The conductive under-coating slurry was applied to both sides of an aluminum foil, and after drying, a conductive under-coating with a thickness of 2 μm was formed on each side. An aluminum foil with a conductive under-coating was obtained.

2) Preparation of negative electrode plate

A negative electrode active material of artificial graphite, hard carbon and conductive agent acetylene black, a binder of styrene rubber (SBR), and a thickener of sodium carboxymethyl cellulose (CMC) were mixed well in deionized water at a weight ratio of 90:5:2:2:1, then coated on a copper foil and dried and cold pressed to obtain a negative electrode plate. The coating amount was 0.01 g/cm$^2$, and the compaction density was 1.7 g/cm$^3$.

3) Assembly of full battery

A polyethylene (PE) porous polymer film was used as the separator, and the positive electrode plate, the separator, and the negative electrode plate were stacked in order, so that the separator was between the positive electrode and negative electrode plates for separation, and a bare cell was obtained by winding. The bare cell was placed in an outer packaging, filled with an electrolyte and encapsulated to obtain a full battery (also referred to as "full cell" below).

The weight of the positive electrode active material in a single full cell was 11.85 g; the weight of the negative electrode active material was 6.73 g.

4) Slurry viscosity test

a. A viscometer was placed on a designated operating table, the bracket was adjusted so that the horizontal bubble was centered and the viscometer was in a horizontal state;

b. sampling: 500 mL of the sample to be tested was placed in a 500 mL glass beaker and tested at a constant temperature of 25°C; and

c. testing: a corresponding rotor and speed were selected, the rotor was tilted after visual inspection of the rotor for no deformation/stains and was slowly infiltrated until all parts below the rotor groove was infiltrated, the slurry was

not allowed to be stirred by the rotor during the infiltration process, test was activated by pressing the start button and performed for 10 minutes, the data was read and recorded every minute, the final viscosity was the average value of 10 groups of data.

FIG. 8 exemplarily shows the instrumentation and test procedure used for the slurry viscosity test.

5) Slurry flowability test (gel test)

Test method: 500 mL of the sample to be tested was contained in a 500 mL glass beaker, a steel ruler of 25 cm long, 2 cm wide with a scale was vertically positioned along the edge of the beaker, slowly immersed into the liquid until a position 4-5 cm below the liquid surface, and the slurry was slowly picked up, and the flow of the slurry brought out by the steel ruler was examined, and photos were taken for recording. The slurry was determined to be unqualified if gel was present.

6) Slurry filtration performance test

A 200-mesh filter of 25cm*25cm was folded into a triangle, as shown in FIG. 9; 500 mL of the slurry was taken and poured quickly along one side of the three-layer filter, the timing was started as the slurry was completely poured into the filter, and the filtration time was recorded when the amount of slurry passing through the filter was 300mL. The slurry was determined to be unqualified if the filtration time was greater than 2 minutes.

7) Discharge DC impedance test

At 25°C, 1.0 C constant current and constant voltage were used to charge the lithium-ion battery to 4.3 V (1.0 C refers to the nominal capacity); the battery power was adjusted to 50% SoC at a rate of 1.0 C and left for 5 minutes, and then was discharged at 4 C constant current for 30 s (voltage data was collected every 1 s), the impedance of the 30 s discharging was calculated as the test data.

8) The number of cycles of capacity retention rate of 80% at 45°C (referred to as "45°C cycle number")

The full battery was charged to 4.3 V at a constant temperature of 45°C, at 2.5-4.3V, then charged at the constant voltage of 4.3 V until the current was less than or equal to 0.05 mA, left for 5 minutes, then discharged to 2.5 V at 1 C, and the discharge capacity was recorded as D0. The charge/discharge cycle was repeated until the discharge capacity was reduced to 80% of D0. The number of cycles the battery has undergone at this point was recorded.

Table 5 Composition of positive electrode active materials for Examples 1-1' to 1-33' and Comparative Examples 1' to 11'.

| Example No. | Core | First coating layer | Second coating layer |
|---|---|---|---|
| Example 1-1' | $Li_{0.999}Mn_{0.60}Fe_{0.393}V_{0.004}Co_{0.003}P_{0.999}S_{0.001}O_4$ | 1% $Li_2FeP_2O_7$/3% $LiFePO_4$ | 2% Carbon |
| Example 1-2' | $Li_{0.999}Mn_{0.60}Fe_{0.40}P_{0.999}S_{0.001}O_4$ | 0.8% $Li_2FeP_2O_7$/2.4% $LiFePO_4$ | 1% Carbon |
| Example 1-3' | $Li_{0.999}Mn_{0.60}Fe_{0.40}P_{0.999}S_{0.001}O_4$ | 1% $Li_2FeP_2O_7$/3% $LiFePO_4$ | 1% Carbon |
| Example 1-4' | $Li_{0.999}Mn_{0.60}Fe_{0.40}P_{0.999}S_{0.001}O_4$ | 1.2% $Li_2FeP_2O_7$/3.6% $LiFePO_4$ | 1% Carbon |
| Example 1-5' | $Li_{0.999}Mn_{0.60}Fe_{0.40}P_{0.999}S_{0.001}O_4$ | 1.4% $Li_2FeP_2O_7$/4.2% $LiFePO_4$ | 1% Carbon |
| Example 1-6' | $Li_{0.999}Mn_{0.60}Fe_{0.40}P_{0.999}S_{0.001}O_4$ | 1.6% $Li_2FeP_2O_7$/4.8% $LiFePO_4$ | 1% Carbon |
| Example 1-7' | $Li_{0.999}Mn_{0.60}Fe_{0.40}P_{0.999}S_{0.001}O_4$ | 1% $Li_2FeP_2O_7$/3% $LiFePO_4$ | 2% Carbon |
| Example 1-8' | $Li_{0.999}Mn_{0.60}Fe_{0.40}P_{0.999}S_{0.001}O_4$ | 1% $Li_2FeP_2O_7$/3% $LiFePO_4$ | 4% Carbon |
| Example 1-9' | $Li_{0.999}Mn_{0.60}Fe_{0.40}P_{0.999}S_{0.001}O_4$ | 1% $Li_2FeP_2O_7$/3% $LiFePO_4$ | 5% Carbon |

(continued)

| Example No. | Core | First coating layer | Second coating layer |
|---|---|---|---|
| Example 1-10' | $Li_{0.999}Mn_{0.60}Fe_{0.40}P_{0.999}S_{0.001}O_4$ | 1% $Li_2FeP_2O_7$/3% $LiFePO_4$ | 6% Carbon |
| Example 1-11' | $Li_{0.999}Mn_{0.60}Fe_{0.40}P_{0.999}S_{0.001}O_4$ | 1.5% $Li_2FeP_2O_7$/2.5% $LiFePO_4$ | 2% Carbon |
| Example 1-12' | $Li_{0.999}Mn_{0.60}Fe_{0.40}P_{0.999}S_{0.001}O_4$ | 2% $Li_2FeP_2O_7$/2% $LiFePO_4$ | 2% Carbon |
| Example 1-13' | $Li_{0.999}Mn_{0.60}Fe_{0.40}P_{0.999}S_{0.001}O_4$ | 2.5% $Li_2FeP_2O_7$/1.5% $LiFePO_4$ | 2% Carbon |
| Example 1-14' | $Li_{0.999}Mn_{0.60}Fe_{0.40}P_{0.999}S_{0.001}O_4$ | 3% $Li_2FeP_2O_7$/1% $LiFePO_4$ | 2% Carbon |
| Example 1-15' | $Li_{0.999}Mn_{0.60}Fe_{0.40}P_{0.999}S_{0.001}O_4$ | 3% $Li_2FeP_2O_7$/1% $LiFePO_4$ | 2% Carbon |
| Example 1-16' | $Li_{0.999}Mn_{0.60}Ni_{0.393}Zn_{0.004}Ti_{0.003}P_{0.999}S_{0.001}O_4$ | 1% $Li_2FeP_2O_7$/3% $LiFePO_4$ | 2% Carbon |
| Example 1-17' | $Li_{0.999}Mno_{0.60}Fe_{0.393}V_{0.007}P_{0.999}S_{0.001}O_4$ | 1% $Li_2FeP_2O_7$/3% $LiFePO_4$ | 2% Carbon |
| Example 1-18' | $Li_{0.999}Mn_{0.60}Fe_{0.393}V_{0.004}Mg_{0.003}P_{0.999}S_{0.001}O_4$ | 1% $Li_2FeP_2O_7$/3% $LiFePO_4$ | 2% Carbon |
| Example 1-19' | $LiMn_{0.60}Fe_{0.393}V_{0.004}Mg_{0.03}P_{0.999}N_{0.001}O_4$ | 1% $Li_2FeP_2O_7$/3% $LiFePO_4$ | 2% Carbon |
| Example 1-20' | $Li_{1.001}Mn_{0.60}Fe_{0.393}V_{0.004}Mg_{0.003}P_{0.999}Si_{0.001}O_4$ | 1% $Li_2FeP_2O_7$/3% $LiFePO_4$ | 2% Carbon |
| Example 1-21' | $Li_{1.001}Mn_{0.55}Fe_{0.40}V_{0.025}Mg_{0.025}P_{0.999}Si_{0.001}O_4$ | 1% $Li_2FeP_2O_7$/3% $LiFePO_4$ | 2% Carbon |
| Example 1-22' | $Li_{1.001}Mn_{0.65}Fe_{0.25}V_{0.05}Mg_{0.05}P_{0.999}Si_{0.001}O_4$ | 1% $Li_2FeP_2O_7$/3% $LiFePO_4$ | 2% Carbon |
| Example 1-23' | $Li_{1.004}Mn_{0.7}Fe_{0.2}V_{0.05}Mg_{0.05}P_{0.998}B_{0.002}O_4$ | 1% $Li_2FeP_2O_7$/3% $LiFePO_4$ | 2% Carbon |
| Example 1-24' | $Li_{1.006}Mn_{0.75}Fe_{0.15}V_{0.05}Mg_{0.05}P_{0.997}B_{0.003}O_4$ | 1% $Li_2FeP_2O_7$/3% $LiFePO_4$ | 2% Carbon |
| Example 1-25' | $Li_{1.002}Mn_{0.60}Fe_{0.393}V_{0.004}Mg_{0.003}P_{0.998}Si_{0.002}O_4$ | 1% $Li_2FeP_2O_7$/3% $LiFePO_4$ | 2% Carbon |
| Example 1-26' | $Li_{0.997}Mn_{0.80}Fe_{0.194}V_{0.003}Mg_{0.003}P_{0.997}S_{0.003}O_4$ | 1% $Li_2FeP_2O_7$/3% $LiFePO_4$ | 2% Carbon |
| Example 1-27' | $Li_{0.996}Mn_{0.60}Fe_{0.393}V_{0.004}Mg_{0.003}P_{0.996}S_{0.004}O_4$ | 1% $Li_2FeP_2O_7$/3% $LiFePO_4$ | 2% Carbon |
| Example 1-28' | $Li_{0.995}Mn_{0.9}Fe_{0.094}V_{0.003}Mg_{0.003}P_{0.995}S_{0.005}O_4$ | 1% $Li_2FeP_2O_7$/3% $LiFePO_4$ | 2% Carbon |
| Example 1-29' | $Li_{0.994}Mn_{0.90}Fe_{0.094}V_{0.003}Mg_{0.003}P_{0.994}S_{0.006}O_4$ | 1% $Li_2FeP_2O_7$/3% $LiFePO_4$ | 2% Carbon |
| Example 1-30' | $Li_{0.993}Mn_{0.90}Fe_{0.094}V_{0.003}Mg_{0.003}P_{0.993}S_{0.007}O_4$ | 1% $Li_2FeP_2O_7$/3% $LiFePO_4$ | 2% Carbon |
| Example 1-31' | $Li_{0.992}Mn_{0.90}Fe_{0.094}V_{0.003}Mg_{0.003}P_{0.992}S_{0.008}O_4$ | 1% $Li_2FeP_2O_7$/3% $LiFePO_4$ | 2% Carbon |

(continued)

| Example No. | Core | First coating layer | Second coating layer |
|---|---|---|---|
| Example 1-32' | $Li_{0.991}Mn_{0.90}Fe_{0.094}V_{0.003}Mg_{0.003}P_{0.991}S_{0.009}O_4$ | 1% $Li_2FeP_2O_7$/3% $LiFePO_4$ | 2% Carbon |
| Example 1-33' | $Li_{0.9}Mn_{0.90}Fe_{0.094}V_{0.003}Mg_{0.003}P_{0.9}S_{0.1}O_4$ | 1% $Li_2FeP_2O_7$/3% $LiFePO_4$ | 2% Carbon |
| Comparative Example 1' | $LiMnPO_4$ | - | 1% Carbon |
| Comparative Example 2' | $LiMn_{0.60}Fe_{0.40}PO_4$ | - | 1% Carbon |
| Comparative Example 3' | $Li_{0.999}MnP_{0.999}S_{0.001}O_4$ | - | 1% Carbon |
| Comparative Example 4' | $Li_{0.999}Mn_{0.60}Fe_{0.40}P_{0.999}S_{0.001}O_4$ | - | 1% Carbon |
| Comparative Example 5' | $Li_{0.999}Mn_{0.60}Fe_{0.40}P_{0.999}S_{0.001}O_4$ | 4% amorphous $Li_2FeP_2O_7$ | 1% Carbon |
| Comparative Example 6' | $Li_{0.999}Mn_{0.60}Fe_{0.40}P_{0.999}S_{0.001}O_4$ | 4% amorphous $LiFePO_4$ | 1% Carbon |
| Comparative Example 7' | $Li_{0.999}Mn_{0.60}Fe_{0.40}P_{0.999}S_{0.001}O_4$ | 1% amorphous $Li_2FeP_2O_7$+ 3% amorphous $LiFePO_4$ | 1% Carbon |
| Comparative Example 8' | Same as Example 1-1' | Same as Example 1-1' | Same as Example 1-1' |
| Comparative Example 9' | Same as Example 1-1' | Same as Example 1-1' | Same as Example 1-1' |
| Comparative Example 10' | Same as Example 1-1' | Same as Example 1-1' | Same as Example 1-1' |
| Comparative Example 11' | Same as Example 1-1' | Same as Example 1-1' | Same as Example 1-1' |
| Note: 1) The crystallinity of $Li_2FeP_2O_7$ and $LiFePO_4$ in Examples 1-1' to 1-33' were all 100%; 2) The crystallinity of $Li_2FeP_2O_7$ was 5% and the crystallinity of $LiFePO_4$ was 8% in Comparative Examples 5' to 7'. | | | |

Table 6 dispersants and infiltrants used for Examples 1-1' and Comparative Example 11'.

| Example No. | Dispersant | | | | | | Infiltrant | | X1/X2 |
|---|---|---|---|---|---|---|---|---|---|
| | Type | M1 | M2 | M3 | Weight average molar mass (million) | X1 | Type | X2 | |
| Example 1-1' | HNBR ( hydrogenated nitrile butadiene rubber) | 0.45 | 0.549 | 0.001 | 22 | 0.002 | Maleic anhydridestyrene copolymer (molar mass 5000) | 0.003 | 0.67 |
| Comparative Example 11' | NBR | 40% | 50% | 10% | 20 | 0.2 | Same as Example 1 | Same as Example 1 | Same as Example 1 |

The types of dispersants and infiltrant, the weight average molar mass and monomer contents (M1, M2, M3) of dispersants, mass percentage contents X1, X2, and X1/X2 in Examples 1-2' to 1-33' were the same as those in Example 1-1'.

No infiltrant and dispersant were used for Comparative Examples 1'-8'.

A dispersant was used but no infiltrant was used in the Comparative Example 9', and the type of dispersant, the weight average molar mass and monomer contents (M1, M2, M3) of dispersant, and the mass percentage content X1 were the same as those in Example 1-1'.

An infiltrant was used but no dispersant was used in Comparative Example 10', and both the type and mass percentage content X2 of the infiltrant were the same as those in Example 1-1'.

Table 7 slurry performance and battery performance for Examples 1-1' to 1-33' and Comparative Examples 1' to 11'

| | Positive electrode slurry performance | | | Battery performance | |
|---|---|---|---|---|---|
| Example No. | Flowability | Viscosity mPa.s | Filterability | DCR (w.r.t. Example 1-1') | 45°C cycle number |
| Example 1-1' | Qualified | 11000 | Qualified | 100% | 1500 |
| Example 1-2' | Qualified | 13000 | Qualified | 123% | 1210 |
| Example 1-3' | Qualified | 14000 | Qualified | 121% | 1215 |
| Example 1-4' | Qualified | 8700 | Qualified | 117% | 1200 |
| Example 1-5' | Qualified | 8800 | Qualified | 119% | 1350 |
| Example 1-6' | Qualified | 9900 | Qualified | 121% | 1435 |
| Example 1-7' | Qualified | 10600 | Qualified | 104% | 1154 |
| Example 1-8' | Qualified | 7000 | Qualified | 108% | 1246 |
| Example 1-9' | Qualified | 10000 | Qualified | 110% | 1324 |
| Example 1-10' | Qualified | 6000 | Qualified | 100% | 1342 |
| Example 1-11' | Qualified | 17000 | Qualified | 120% | 1188 |
| Example 1-12' | Qualified | 7000 | Qualified | 115% | 1000 |
| Example 1-13' | Qualified | 8000 | Qualified | 115% | 1004 |
| Example 1-14' | Qualified | 10900 | Qualified | 117% | 899 |
| Example 1-15' | Qualified | 11000 | Qualified | 120% | 989 |
| Example 1-16' | Qualified | 13300 | Qualified | 115% | 1130 |
| Example 1-17' | Qualified | 8500 | Qualified | 100% | 1450 |
| Example 1-18' | Qualified | 7000 | Qualified | 99% | 1460 |
| Example 1-19' | Qualified | 9000 | Qualified | 92% | 1560 |
| Example 1-20' | Qualified | 10800 | Qualified | 97% | 1548 |
| Example 1-21' | Qualified | 10000 | Qualified | 98% | 1643 |
| Example 1-22' | Qualified | 13500 | Qualified | 104% | 1478 |
| Example 1-23' | Qualified | 11500 | Qualified | 108% | 1439 |
| Example 1-24' | Qualified | 9000 | Qualified | 103% | 1500 |
| Example 1-25' | Qualified | 8000 | Qualified | 111% | 1395 |
| Example 1-26' | Qualified | 8900 | Qualified | 116% | 1320 |
| Example 1-27' | Qualified | 18000 | Qualified | 111% | 1494 |
| Example 1-28' | Qualified | 9800 | Qualified | 112% | 1200 |

(continued)

| | Positive electrode slurry performance | | | Battery performance | |
|---|---|---|---|---|---|
| Example No. | Flowability | Viscosity mPa.s | Filterability | DCR (w.r.t. Example 1-1') | 45°C cycle number |
| Example 1-29' | Qualified | 11300 | Qualified | 105% | 1296 |
| Example 1-30' | Qualified | 11000 | Qualified | 120% | 1149 |
| Example 1-31' | Qualified | 10500 | Qualified | 110% | 1258 |
| Example 1-32' | Qualified | 10000 | Qualified | 115% | 1078 |
| Example 1-33 | Qualified | 15900 | Qualified | 125% | 1054 |
| Comparative Example 1' | Unqualified | 41000 | Unqualified | 300% | 203 |
| Comparative Example 2' | Unqualified | 33750 | Unqualified | 270% | 375 |
| Comparative Example 3' | Unqualified | 23800 | Unqualified | 280% | 308 |
| Comparative Example 4' | Unqualified | 33200 | Unqualified | 215% | 530 |
| Comparative Example 5' | Unqualified | 34000 | Unqualified | 150% | 664 |
| Comparative Example 6' | Unqualified | 23200 | Unqualified | 150% | 739 |
| Comparative Example 7' | Unqualified | 25000 | Unqualified | 130% | 740 |
| Comparative Example 8' | Unqualified | 24000 | Unqualified | 141% | 1100 |
| Comparative Example 9' | Unqualified | 43000 | Qualified | 130% | 1270 |
| Comparative Example 10' | Qualified | 32000 | Unqualified | 153% | 1042 |
| Comparative Example 11' | Qualified | 8300 | Qualified | 280% | 745 |

As can be seen from the above table, the processibility of the slurries without both dispersant and infiltrant, or with only an infiltrant but without a dispersant, was poor and affected the battery performance. The use of dispersant and infiltrant, especially hydrogenated nitrile butadiene rubber and maleic anhydride-styrene copolymer as the dispersant and the infiltrant, respectively, can lead to significant improvements in the processibility and/or battery performance of the slurries.

The difference between Examples 2-1' to 2-3' and Example 1-1' was the difference in the crystallinity of the positive electrode active material, other than that, such as the type of dispersant and infiltrant, the weight average molar mass, and monomer contents (M1, M2, M3) of the dispersant, the mass percentage contents X1, X2, and X1/ X2 were the same as those in Examples 1-1'.

Table 8 Crystallinity, slurry and cell performances of pyrophosphate and phosphate for Examples 1-1', 2-1' to 2-3'.

| Example No. | First coating layer | Pyrophosphate and phosphate crystallinity | Positive electrode slurry performance | | | Battery performance | |
|---|---|---|---|---|---|---|---|
| | | | Flowability | Viscosity mPa.s | Filterability | DCR (w.r.t. Example 1-1') | 45°C cycle number |
| Example 2-1' | 1% $Li_2FeP_2O_7$/ 3% $LiFePO_4$ | 30% | Qualified | 11000 | Qualified | 132% | 700 |
| Example 2-2' | 1% $Li_2FeP_2O_7$/ 3% $LiFePO_4$ | 50% | Qualified | 11500 | Qualified | 116% | 850 |
| Example 2-3' | 1% $Li_2FeP_2O_7$/ 3% $LiFePO_4$ | 70% | Qualified | 12000 | Qualified | 103% | 1050 |
| Example 1-1' | 1% $Li_2FeP_2O_7$/ 3% $LiFePO_4$ | 100% | Qualified | 11000 | Qualified | 100% | 1500 |

As shown in the tables above, for positive electrode active materials with different pyrophosphate and phosphate crystallinity, a good processability and/or battery performances of the slurries can be obtained using hydrogenated nitrile butadiene rubber and maleic anhydride-styrene copolymer as the dispersant and the infiltrant, respectively.

Based on the hydrogenated nitrile butadiene rubber used in Example 1-1', the content of each monomer was adjusted to obtain hydrogenated nitrile butadiene rubber with different hydrogenation degrees and used as a dispersant for the preparation of positive electrode slurries, as shown in Examples 3-1' to 3-7'. The weight average molar mass of HNBR, the type of infiltrant, the mass percentages X1 and X2, and X1/X2 were the same as those in Example 1'.

Table 9 Dispersant parameters, slurry performance and battery performance for Examples 3-1' to 3-7'.

| | Dispersant | | | | | Positive electrode slurry performance | | | Battery performance | |
|---|---|---|---|---|---|---|---|---|---|---|
| | Type | M1 | M2 | M3 | M3/ (M2+M3) | Flowability | Viscosity mPa.s | Filterability | DCR (w.r.t. Example 1-1') | 45°C cycle number |
| Example 1-1' | HNBR (hydrogenated nitrile butadiene rubber) | 0.45 | 0.549 | 0.001 | 0.0018 | Qualified | 11000 | Qualified | 100% | 1500 |
| Example 3-1' | HNBR | 0.45 | 0.55 | 0 | 0 | Qualified | 13000 | Qualified | 98% | 1456 |
| Example 3-2' | HNBR | 0.45 | 0.54725 | 0.00275 | 0.005 | Qualified | 12600 | Qualified | 97% | 1559 |
| Example 3-3' | HNBR | 0.45 | 0.5445 | 0.0055 | 0.01 | Qualified | 10000 | Qualified | 99% | 1470 |
| Example 3-4' | HNBR | 0.45 | 0.539 | 0.011 | 0.02 | Qualified | 9800 | Qualified | 101% | 1498 |
| Example 3-5' | HNBR | 0.45 | 0.5335 | 0.0165 | 0.03 | Qualified | 12800 | Qualified | 101% | 1504 |
| Example 3-6' | HNBR | 0.45 | 0.5225 | 0.0275 | 0.05 | Qualified | 12500 | Qualified | 103% | 1432 |
| Example 3-7' | HNBR | 0.45 | 0.506 | 0.044 | 0.08 | Qualified | 9600 | Qualified | 205% | 422 |

As shown in Table 9, the HNBR used in Example 3-7' had a lower hydrogenation compared to the other examples, resulting in poorer battery performance despite the lower viscosity of the positive electrode slurry.

On the basis of Example 1-1', the proportional relationship between the content of dispersant and infiltrant was adjusted to prepare positive electrode slurries, as shown in Examples 4-1' to 4-10'. The parameters of dispersant and infiltrant were the same as Example 1' except that the mass percentages of X1 and X2, and X1/X2 were different from Example 1'.

Table 10 Ratio parameters of dispersant to infiltrant, slurry performance and battery performance for Examples 4-1' to 4-10'.

| | Dispersant | Infiltrant | | Positive electrode slurry performance | | | Battery performance | |
|---|---|---|---|---|---|---|---|---|
| | X1 (%) | X2 (%) | X 1/X2 | Flowability | Viscosity mPa.s | Filterability | DCR (w.r.t. Example 4-1') | 45°C cycle number |
| Example 4-1' | 0.05 | 0.5 | 0.10 | Qualified | 11800 | Qualified | 100% | 1502 |
| Example 4-2' | 0.1 | 0.5 | 0.20 | Qualified | 10000 | Qualified | 105% | 1500 |
| Example 4-3' | 0.5 | 0.5 | 1.00 | Qualified | 12500 | Qualified | 110% | 1490 |
| Example 4-4' | 1 | 0.5 | 2.00 | Qualified | 7100 | Qualified | 113% | 1490 |
| Example 4-5' | 0.25 | 0.05 | 5.00 | Unqualified | 36000 | Qualified | 107% | 889 |
| Example 4-6' | 0.25 | 0.2 | 1.25 | Unqualified | 44000 | Qualified | 100% | 901 |
| Example 4-7' | 0.25 | 0.3 | 0.83 | Qualified | 10200 | Qualified | 95% | 873 |
| Example 4-8' | 0.25 | 0.8 | 0.31 | Qualified | 13000 | Qualified | 112% | 1192 |
| Example 4-9' | 0.25 | 2 | 0.13 | Qualified | 5000 | Qualified | 108% | 1036 |
| Example 4-10' | 0.05 | 2 | 0.03 | Unqualified | 32500 | Unqualified | 123% | 472 |

As shown in Table 10, compared to other Examples, the X1/X2 of Examples 4-10' were too small and the slurry performance and battery performance were poor.

On the basis of Example 1-1', the type of infiltrant was changed and the positive electrode slurries were prepared as shown in Examples 5-1 to 5-6.

Table 11 Types of infiltrants, slurry performance and battery performance of Examples 5-1 to 5-6.

| | Infiltrant | | | Positive electrode slurry performance | | | Battery performance | |
|---|---|---|---|---|---|---|---|---|
| | Type | X2 | X 1/X2 | Flowability | Viscosity mPa.s | Filterability | DCR (w.r.t. Example 5-1') | 45°C cycle number |
| Example 5-1 | No infiltrant added | / | / | Unqualified | 40000 | Unqualified | 100% | 1332 |
| Example 5-2 | PVP (polyvinylpyrrolidone) | 0.50% | 0.4 | Qualified | 16000 | Qualified | 115% | 1300 |
| Example 5-3 | Isopropanolamine | 1.00% | 0.2 | Qualified | 11100 | Qualified | 105% | 1400 |
| Example 5-4 | 2-Amino-2methyl-1-propanol | 1.00% | 0.2 | Qualified | 9800 | Qualified | 104% | 1453 |
| Example 5-5 | Styrene-maleic anhydride copolymer | 0.50% | 0.4 | Qualified | 7900 | Qualified | 108% | 1511 |
| Example 5-6 | Styrene-maleic anhydride copolymer | 0.30% | 0.67 | Qualified | 8100 | Qualified | 103% | 1530 |

As shown in the table above, HNBR was compounded with PVP, isopropanolamine, 2-amino-2methyl-1-propanol, or styrene-maleic anhydride copolymer, respectively, to obtain a good processability of the slurries and/or battery performance.

It should be noted that the present application is not limited to the above-mentioned embodiments. The above-mentioned embodiments are merely exemplary examples, and embodiments that have substantially the same configuration as the technical idea and exert the same effects within the scope of the technical proposals of the present application are included in the technical scope of the present application. In addition, without departing from the scope of the present application, various modifications added to the embodiments that are conceivable by those skilled in the art, and other forms constructed by combining some components in the embodiments are also included in the scope of the present application.

## Claims

1. A positive electrode active material composition, comprising a positive electrode active material and a dispersant, wherein,

    the positive electrode active material comprises a core and a shell coating the core,

        the core comprises $Li_{1+x}Mn_{1-y}A_yP_{1-z}R_zO_4$, x = -0.100-0.100, y = 0.001-0.500, and z = 0.001-0.100; the A is one or more selected from Zn, Al, Na, K, Mg, Mo, W, Ti, V, Zr, Fe, Ni, Co, Ga, Sn, Sb, Nb, and Ge, optionally one or more of Fe, Ti, V, Ni, Co and Mg; the R is one or more selected from B, Si, N and S; and the shell comprises a first coating layer coating the core and a second coating layer coating the first coating layer, wherein,

            the first coating layer comprises a pyrophosphate $MP_2O_7$ and a phosphate $XPO_4$, the M and X are each independently one or more selected from Li, Fe, Ni, Mg, Co, Cu, Zn, Ti, Ag, Zr, Nb or Al; and the second coating layer comprises carbon; and

    the dispersant comprises a polymer, and the polymer comprises:

        a first monomeric unit represented by Formula 1;
        a second monomeric unit which is at least one selected from the group consisting of a monomeric unit represented by Formula 2 and a monomeric unit represented by Formula 3; and
        a third monomeric unit which is at least one selected from the group consisting of a monomeric unit represented by Formula 4 and a monomeric unit represented by Formula 5;

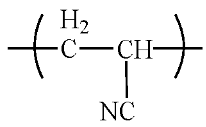

Formula 1

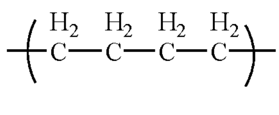

Formula 2

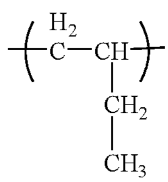

Formula 3

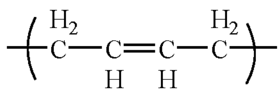

Formula 4

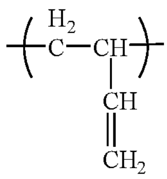

Formula 5.

2. The positive electrode active material composition according to claim 1, wherein, with respect to a total mass of the polymer,

   the first monomeric unit has a mass percentage content of M1, M1 is 10%-55%, optionally 25%-55%; and/or
   the second monomeric unit has a mass percentage content of M2, M2 is 40%-80%, optionally 50%-70%; and/or
   the third monomeric unit has a mass percentage content of M3, M3 is 0%-10% and optionally 0.001%-2%

3. The positive electrode active material composition according to claim 2, wherein, M3/(M2+M3) is 0%-5%, optionally 0.001%-1%.

4. The positive electrode active material composition according to any one of claims 1-3, wherein,

   the polymer is hydrogenated nitrile butadiene rubber; and/or
   the polymer has a weight average molar mass of 50,000-500,000, optionally 150,000-350,000; and/or
   with respect to a total mass of the positive electrode active material, the dispersant has a mass percentage content of X1, X1 is 0.05%-1%, optionally 0.1%-0.5%.

5. The positive electrode active material composition according to any one of claims 1-4, wherein, the positive electrode active material composition further comprises an infiltrant, the infiltrant has a surface tension of 20 mN/m-40 mN/m, and a molecular structure of the infiltrant comprises at least one of the following functional groups: -CN, $-NH_2$, -NH-, -N-, -OH, -C=O, - COO-, -C(=O)-O-C(=O)-.

6. The positive electrode active material composition according to claim 5, wherein,

   the infiltrant comprises one or more selected from a small-molecule organic solvent and a low-molecular-weight polymer;
   the small-molecule organic solvent comprises one or more selected from an alcohol amine compound, an alcohol compound, and a nitrile compounds, optionally, the alcohol amine compound has a carbon atom number of 1-16, optionally 2-6;
   the low-molecular-weight polymer comprises one or more selected from a maleic anhydride-styrene copolymer, polyvinylpyrrolidone, polysiloxane, optionally, the low-molecular-weight polymer has a weight average molar mass of 6000 or less, optionally 3000-6000.

7. The positive electrode active material composition according to claim 5 or 6, wherein, with respect to a total mass of the positive electrode active material, the infiltrant has a mass percentage content of X2, X2 is 0.05%-2%, optionally 0.2%-0.8%.

8. The positive electrode active material composition according to any one of claims 5-7, wherein, X1/X2 is 0.05-20, optionally 0.1-1, and further 0.3-0.8.

9. The positive electrode active material composition according to any one of claims 1-8, wherein, the phosphate in the first coating layer has a crystal plane spacing of 0.345-0.358 nm and an angle of 24.25°-26.45° in the crystal direction (111); the pyrophosphate of the first coating layer has a crystal plane spacing of 0.293-0.326 nm and an angle of 26.41°-32.57° in the crystal direction (111).

10. The positive electrode active material composition according to any one of claims 1-9, wherein, the ratio of y to 1-y in the core is 1:10 to 10:1, optionally 1:4 to 1:1.

11. The positive electrode active material composition according to any one of claims 1-10, wherein, the ratio of z to 1-z in the core is 1:9 to 1:999, optionally 1:499 to 1:249.

**12.** . The positive electrode active material composition according to any one of claims 1-11, wherein, the first coating layer has a coating amount greater than 0wt% and less than or equal to 7wt%, optionally 4-5.6wt%, with respect to a weight of the core.

**13.** The positive electrode active material composition according to any one of claims 1-12, wherein, a weight ratio of the pyrophosphate to the phosphate in the first coating layer is 1:3 to 3:1, optionally 1:3 to 1:1.

**14.** The positive electrode active material composition according to any one of claims 1-13, wherein, the pyrophosphate and the phosphate each independently has a crystallinity of 10% to 100%, optionally 50% to 100%.

**15.** The positive electrode active material composition according to any one of claims 1-14, wherein, the second coating layer has a coating amount of greater than 0wt% and less than or equal to 6wt%, optionally 3-5wt%, with respect to a weight of the core.

**16.** The positive electrode active material composition according to any one of claims 1-15, wherein, the A is at least two selected from Fe, Ti, V, Ni, Co, and Mg.

**17.** The positive electrode active material composition according to any one of claims 1-16, wherein, the positive electrode active material has a Li/Mn antisite defect concentration of 4% or less, optionally 2% or less.

**18.** The positive electrode active material composition according to any one of claims 1-17, wherein, the positive electrode active material has a lattice change rate of 6% or less, optionally 4% or less.

**19.** The positive electrode active material composition according to any one of claims 1-18, wherein, the positive electrode active material has a surface oxygen valence state of -1.88 or less, optionally -1.98 to -1.88.

**20.** The positive electrode active material composition according to any one of claims 1-19, wherein, the positive electrode active material has a compaction density of 2.0 g/$cm^3$ or higher, optionally 2.2 g/$cm^3$ or higher under 3 T or less.

**21.** A positive electrode slurry, comprising the positive electrode active material composition according to any one of claims 1-20; optionally also comprising one or more of a solvent, a positive electrode conductive agent, and a positive electrode binder.

**22.** The positive electrode slurry according to claim 21, wherein,

the solvent comprises N-methylpyrrolidone (NMP); and/or
the positive electrode binder comprises one or more selected from polyvinylidene fluoride (PVDF), polytetrafluoroethylene (PTFE), vinylidene fluoride-tetrafluoroethylene-propylene terpolymers, vinylidene fluoride-hexafluoropropylene-tetrafluoroethylene terpolymers, vinylidene fluoride-hexafluoropropylene copolymers, and fluorinated acrylate resin; and/or
the positive electrode conductive agent comprises one or more selected from superconducting carbon, acetylene black, carbon black, Ketjen black, carbon dots, carbon nanotubes, graphene, and carbon nanofibers.

**23.** The positive electrode slurry according to claim 21 or 22, wherein,

the positive electrode slurry has a solid content of 40%-70%, optionally 55%-65%; and/or
the positive electrode slurry has a viscosity of 3000 mpa.s-50,000 mpa.s at 20°C, optionally 10,000 mpa.s-20,000 mpa.s.

**24.** A positive electrode plate, comprising a positive electrode current collector and a positive electrode film layer disposed on at least one surface of the positive electrode current collector, wherein the positive electrode film layer comprises the positive electrode active material composition according to any one of claims 1-20, or is made by coating the positive electrode slurry according to any one of claims 21-23;

optionally, a coating method is selected from lifting method, film- pulling method,
electrostatic spraying method and spin coating method.

**25.** The positive electrode plate according to claim 24, wherein, with respect to a total mass of the positive electrode

film layer,

the dispersant has a mass percentage content of W2, W2 is 1% or less, optionally 0.1%-0.5%; and/or,
the infiltrant has a mass percentage content of W3, W3 is 2% or less, optionally 0.1%-0.5%; and/or,
the positive electrode binder has a mass percentage content of W4, W4 is 5.5% or less, optionally 1%-3%; and/or,
the positive electrode conductive agent has a mass percentage content of W5, W5 is 2.5% or less, optionally 0.1%-1%.

**26.** A secondary battery, comprising the positive electrode plate according to claim 24 or 25.

**27.** A battery module, comprising the positive electrode plate according to claim 24 or 25, or the secondary battery according to claim 26.

**28.** A battery pack, comprising the positive electrode plate according to claim 24 or 25, the secondary battery according to claim 26, or the battery module according to claim 27.

**29.** An electric device, comprising the positive electrode plate according to claim 24 or 25, the secondary battery according to claim 26, the battery module according to claim 27, or the battery pack according to claim 28.

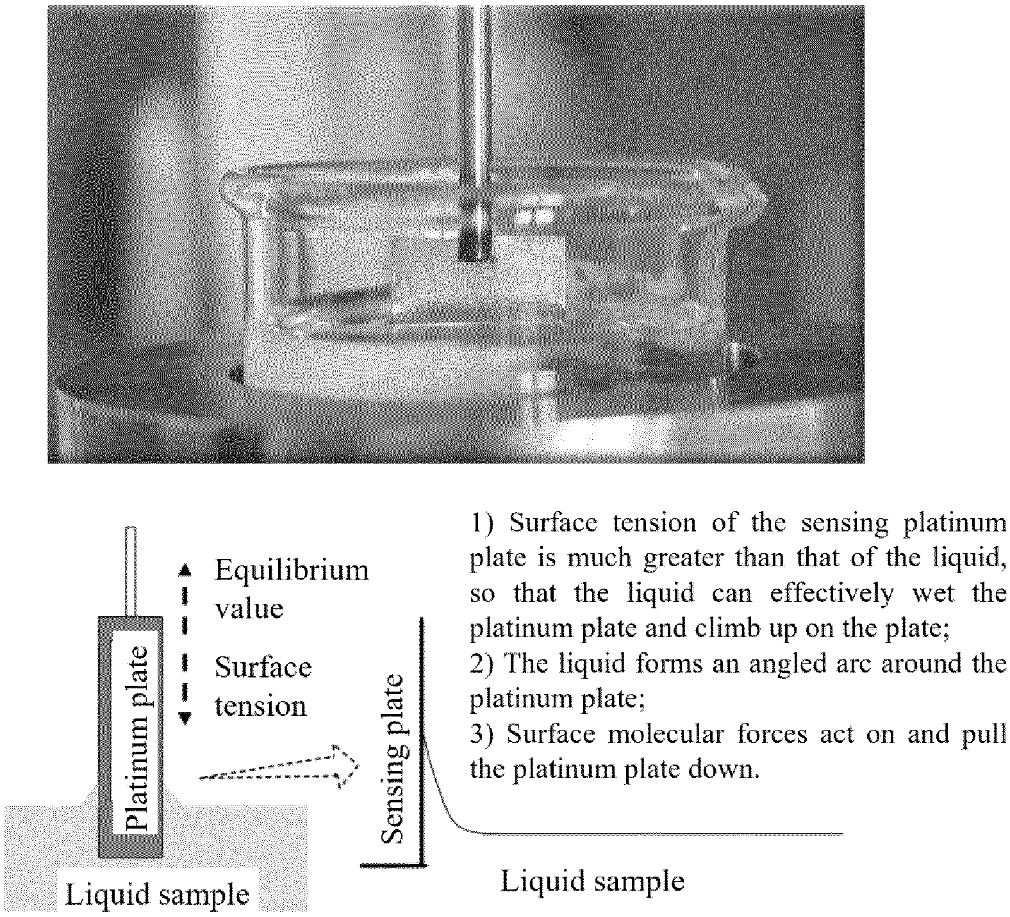
Equilibrium value
Surface tension
Platinum plate
Liquid sample
Sensing plate
1) Surface tension of the sensing platinum plate is much greater than that of the liquid, so that the liquid can effectively wet the platinum plate and climb up on the plate;
2) The liquid forms an angled arc around the platinum plate;
3) Surface molecular forces act on and pull the platinum plate down.
Liquid sample

FIG. 1

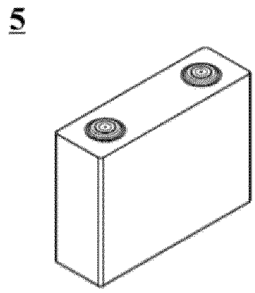
5

FIG. 2

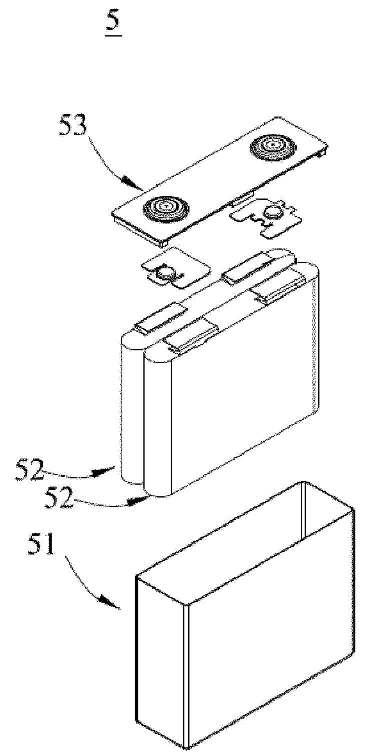


FIG. 3

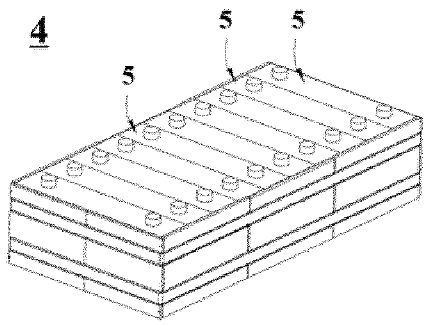


FIG. 4

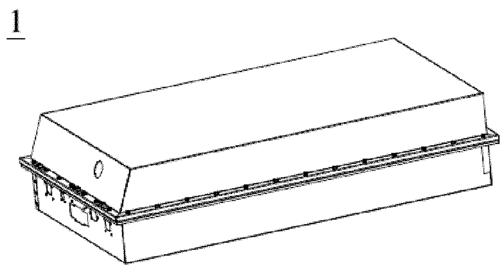


FIG. 5

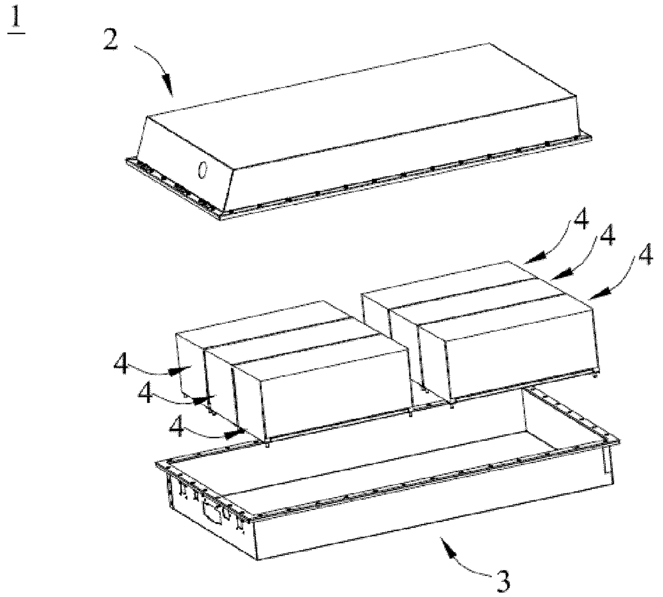


FIG. 6

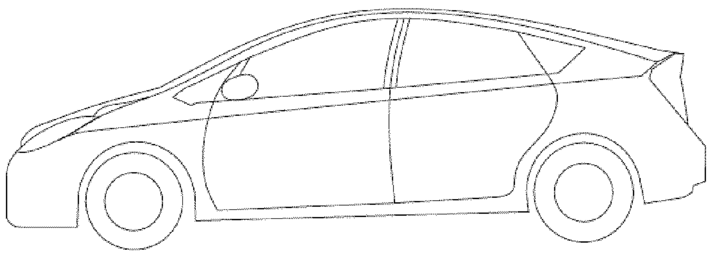

FIG. 7

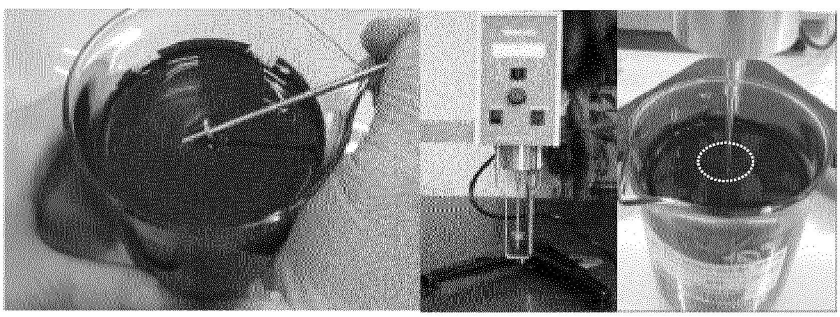

FIG. 8

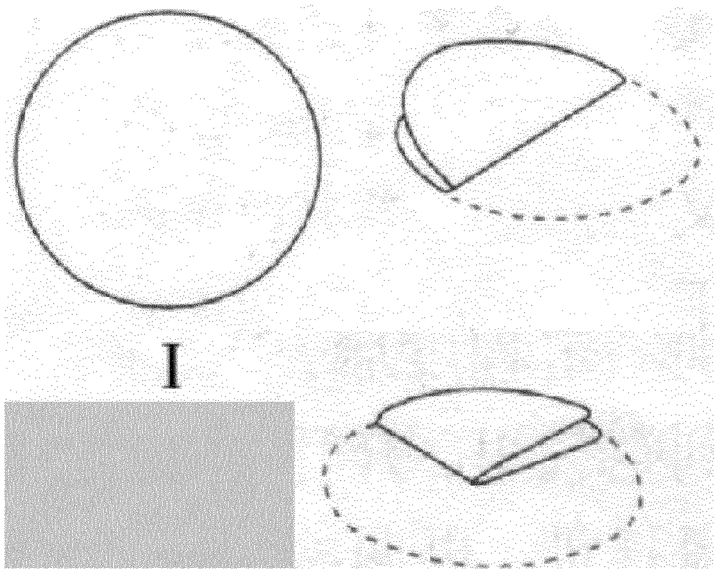


FIG. 9

## INTERNATIONAL SEARCH REPORT

International application No.
**PCT/CN2022/084871**

**A. CLASSIFICATION OF SUBJECT MATTER**

H01M 4/58(2010.01)i; H01M 4/62(2006.01)i; H01M 10/0525(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; WPABS; VEN; ENTXT; CNKI: 正极, 阴极, 磷酸锰锂, LiMnPO4, 掺杂, 核, 壳, 包覆, 分散剂, 氢化丁腈橡胶, positive electrode, cathode, lithium manganese phosphate, dope, core, shell, coat, dispersing agent, hydrogenated nitrile rubber

**C. DOCUMENTS CONSIDERED TO BE RELEVANT**

| Category* | Citation of document, with indication, where appropriate, of the relevant passages | Relevant to claim No. |
|---|---|---|
| Y | JP 2014056722 A (ASAHI GLASS CO., LTD.) 27 March 2014 (2014-03-27) description, paragraphs 18-100 | 1-29 |
| Y | CN 106816600 A (BYD CO., LTD.) 09 June 2017 (2017-06-09) description, paragraphs 7-163 | 1-29 |
| Y | CN 114174384 A (LG CHEMICAL LTD.) 11 March 2022 (2022-03-11) description, paragraphs 29-170 | 1-29 |
| Y | CN 103069624 A (SHARP CORP.) 24 April 2013 (2013-04-24) description, paragraphs 2 and 18-137 | 1-29 |
| Y | CN 106058225 A (CHINA AVIATION LITHIUM BATTERY (LUOYANG) CO., LTD.) 26 October 2016 (2016-10-26) description, paragraphs 27-51 | 1-29 |
| Y | CN 110431697 A (LG CHEMICAL LTD.) 08 November 2019 (2019-11-08) description, paragraphs 11-92 | 1-29 |
| A | CN 109301174 A (NINGDE CONTEMPORARY AMPEREX TECHNOLOGY CO., LTD.) 01 February 2019 (2019-02-01) entire document | 1-29 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 December 2022** | **06 January 2023** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.
**PCT/CN2022/084871**

| Patent document cited in search report | | | Publication date (day/month/year) | Patent family member(s) | | | Publication date (day/month/year) |
|---|---|---|---|---|---|---|---|
| JP | 2014056722 | A | 27 March 2014 | None | | | |
| CN | 106816600 | A | 09 June 2017 | CN | 106816600 | B | 25 December 2020 |
| CN | 114174384 | A | 11 March 2022 | WO | 2021141376 | A1 | 15 July 2021 |
| | | | | JP | 2022536304 | A | 15 August 2022 |
| | | | | EP | 3978564 | A1 | 06 April 2022 |
| | | | | KR | 20210089093 | A | 15 July 2021 |
| CN | 103069624 | A | 24 April 2013 | US | 2013209886 | A1 | 15 August 2013 |
| | | | | WO | 2012002327 | A1 | 05 January 2012 |
| | | | | JP | WO2012002327 | A1 | 22 August 2013 |
| | | | | US | 9005810 | B2 | 14 April 2015 |
| | | | | JP | 5843766 | B2 | 13 January 2016 |
| | | | | CN | 103069624 | B | 22 June 2016 |
| CN | 106058225 | A | 26 October 2016 | WO | 2018032569 | A1 | 22 February 2018 |
| CN | 110431697 | A | 08 November 2019 | KR | 20180107758 | A | 02 October 2018 |
| | | | | WO | 2018174619 | A1 | 27 September 2018 |
| | | | | US | 2020295347 | A1 | 17 September 2020 |
| | | | | KR | 102323808 | B1 | 10 November 2021 |
| | | | | US | 11283058 | B2 | 22 March 2022 |
| | | | | CN | 110431697 | B | 19 July 2022 |
| CN | 109301174 | A | 01 February 2019 | CN | 109301174 | B | 13 November 2020 |

Form PCT/ISA/210 (patent family annex) (January 2015)